# EUROPÄISCHE PATENTSCHRIFT

(11) **EP 2 616 191 B1**
(45) Veröffentlichungstag und Bekanntmachung des Hinweises auf die Patenterteilung: **12.04.2017**
(21) Anmeldenummer: 11784433.2
(22) Anmeldetag: 12.09.2011
(51) Int. Cl.: B05D 7/14, B05D 7/00, B05D 1/18, B05D 7/16, B05D 3/00, C09D 5/08, C25D 13/00, C23C 18/54

(54) **VERFAHREN ZUR BESCHICHTUNG VON OBERFLÄCHEN UND VERWENDUNG DER NACH DIESEM VERFAHREN BESCHICHTETEN GEGENSTÄNDE**
METHOD FOR COATING SURFACES AND USE OF THE ARTICLES COATED USING SAID METHOD
PROCÉDÉ DE REVÊTEMENT DE SURFACES ET UTILISATION DES OBJETS REVÊTUS SELON CE PROCÉDÉ

(30) Priorität: 13.09.2010 DE 102010040651
(43) Veröffentlichungstag der Anmeldung: 24.07.2013
(73) Patentinhaber: Chemetall GmbH, 60487 Frankfurt am Main (DE)
(72) Erfinder: WASSERFALLEN, Daniel, 55128 Mainz (DE); SCHWAMB, Michael, 60325 Frankfurt (DE); ETTRICH, Cindy, 65929 Frankfurt/Main (DE); SOTKE, Vera, 60385 Frankfurt am Main (DE); DROLL, Martin, 33189 Schlangen (DE); SEEWALD, Oliver, 34431 Marsberg (DE); BREMSER, Wolfgang, 33100 Paderborn (DE); FRENKEL, Aliaksandr, 60385 Frankfurt am Main (DE)
(74) Vertreter: Fitzner, Uwe
(86) Internationale Anmeldenummer: PCT/EP2011/065764
(87) Internationale Veröffentlichungsnummer: WO 2012/034976

(56) Entgegenhaltungen:
- DE-A1-102008 043 682
- US-A1- 2003 082 391
- SHI X ET AL: "Polyelectrolyte multilayer nanoreactors toward the synthesis of diverse nanostructured materials", PROGRESS IN POLYMER SCIENCE, PERGAMON PRESS, OXFORD, GB, Bd. 29, Nr. 10, 1. Oktober 2004 (2004-10-01), Seiten 987-1019, XP004621882, ISSN: 0079-6700, DOI: 10.1016/J.PROGPOLYMSCI.2004.07.001

## Beschreibung

Die Erfindung betrifft ein Verfahren zur Beschichtung von Oberflächen, eine entsprechende Beschichtung sowie die Verwendung der nach diesem Verfahren beschichteten Gegenstände.

Es existieren zahlreiche Methoden, um auf insbesondere metallischen Oberflächen und vorzugsweise mittels Tauchverfahren homogene Beschichtungen zu erzeugen. Hierbei benutzt man insbesondere für die Erzeugung von Korrosionsschutzbeschichtungen, Primerbeschichtungen und/oder Elektrotauchlackschichten solche Zusammensetzungen, die vorwiegend aus einer organischen Matrix und/oder aus organischen und/oder anorganischen Zusatzkomponenten bestehen, und vorzugsweise folgende Techniken: Um möglichst geschlossene Beschichtungen zu erzeugen, sind Korrosionsschutzbeschichtungen mit einer Trockenfilmdicke von mindestens 3 µm erwünscht, die in einem Verfahrensschritt möglichst dick aufgebracht werden. Derartige Korrosionsschutzbeschichtungen können insbesondere als Primer oder als stromlos applizierter Tauchlack eingesetzt werden, insbesondere in Form einer Dispersion, die wie ein Elektrotauchlack genutzt wird.

### Stand der Technik:

Die klassischen stromlosen Verfahren beruhen auf der Nutzung der rheologischen Eigenschaften der verwendeten Formulierungen, um eine vollständige Beschichtung eines Werkstückes zu erzielen. Obwohl durch kontinuierliches Rotieren des betreffenden Werkstückes nach dem Tauchvorgang eine Ansammlung von Beschichtungsmaterial an kritischen Stellen verringert werden kann, ist es mit dieser Methode nicht möglich, eine gleichmäßig dicke und homogene Beschichtung zu erzielen. Denn es können während des Trocknungs- und/oder Vernetzungsvorgangs an Stellen mit höheren Beschichtungsanteilen Fehlstellen wie Blasen und Kocher entstehen, die die Qualität der gesamten Beschichtung beeinträchtigen.

Die elektrophoretischen Verfahren vermeiden diese Problematik, indem elektrischer Strom eingesetzt wird, bei der in Flüssigkeit dispergierte oder kolloidal gelöste geladene Teilchen im elektrischen Feld wandern. Hiermit gelingt es, eine gleichmäßige Beschichtung im Tauchen abzuscheiden und z.B. einen Elektrotauchlack aufzutragen. Mit dieser Methode gelingt die Erzeugung von homogenen Beschichtungen auf metallischen Werkstücken. Die abgeschiedenen Beschichtungen zeigen eine ausgesprochen gute Haftung im nassen Zustand zum metallischen Untergrund, was das Werkstück ohne Ablösung der Beschichtung in einem nachfolgenden Spülschritt zu behandeln erlaubt. Dies führt dazu, dass auch an schwer zugänglichen Stellen und Vertiefungen des Werkstücks die Menge an wässeriger Zusammensetzung und der Schichtdicke der hieraus entstehenden Beschichtung gleichmäßig aufgebracht werden kann und somit weniger Fehlstellen während des Trocknungsvorgangs entstehen können.

Bei allen diesen Verfahren kann in Vertiefungen eine überschüssige Flüssigkeitsmenge an wässeriger Zusammensetzung angesammelt werden und auf den nachfolgenden Verfahrensschritt übertragen werden. Die elektrophoretischen Verfahren haben den Nachteil, dass neben der notwendigen Menge an elektrischer Energie und neben geeigneten Tauchbecken, die zu einer Erhöhung der Kosten führen, auch sogenannte Kantenfluchten auftreten, da elektrische Felder an Kanten inhomogen aufgebaut werden und die Kanten ungleichmäßig und eventuell auch unvollständig beschichtet werden. Bei dem Aufbau der Werkstücke sollten zudem Hohlräume vermieden werden, da an diesen Stellen ein Effekt vergleichbar mit dem Phänomen des Faraday'schen Käfigs auftritt. Aufgrund der dort verringerten elektrischen Feldstärke, die zum Abscheiden einer ausreichenden Feststoffmenge an solchen Bereichen nicht ausreicht, tritt am Werkstück keine oder nur eine Beschichtung von deutlich geringerer Dicke insbesondere an hintergriffigen Stellen (Umgriffsproblematik) auf, was zu einer deutlichen Beeinträchtigung der Qualität der Beschichtung führt. Zusätzlich weisen die elektrophoretischen Verfahren bei einer elektrischen Tauchlackierung (ETL) wie z.B. bei einer kathodischen Tauchlackierung (KTL) die folgenden Nachteile auf: Ein entsprechendes Tauchbad ist zusammen mit allen elektrischen und mechanischen Einrichtungen zur Temperaturführung, Stromversorgung und elektrischen Isolierung, mit Umwälzeinrichtung, mit Zugabeeinrichtung und bis zur Entsorgung der Anolyt-Säure, die bei der elektrolytischen Beschichtung entsteht, und mit Ultrafiltration zur Lackrückgewinnung (Rezyklierung) sowie mit Steuereinrichtungen sehr aufwändig aufgebaut. Die Prozessführung erfordert einen sehr hohen technischen Aufwand, auch aufgrund der großen Stromstärken und Energiemengen, bei der Vergleichmäßigung der elektrischen Parameter über das Badvolumen, bei der präzisen Einstellung aller Prozessparameter sowie bei der Wartung und Säuberung der Anlage.

Die bekannten autophoretischen Verfahren beruhen auf einer stromlosen Selbstabscheidung, bei der beim Beizangriff Metallionen aus einer insbesondere metallischen Oberfläche herausgelöst werden und bei der aufgrund der Konzentration an Ionen wie z.B. an zweiwertigen kationisch wirkenden Ionen wie insbesondere an Eisen- oder/und Zinkionen an der entstehenden Grenzfläche eine Emulsion und/oder Suspension ausgefällt, und/oder niedergeschlagen wird. Obwohl die autophoretischen Verfahren nicht die Nachteile der elektrophoretischen Verfahren bezüglich des Faraday'schen Käfigeffektes aufweisen, müssen die in den bekannten autophoretischen Verfahren entstandenen Beschichtungen nach dem ersten Aktivierungsschritt in einem aufwändigen mehrstufigen Tauchverfahren fixiert werden. Außerdem führt der Beizangriff zu einer unvermeidbaren Verunreinigung der aktiven Zone insbesondere einer Tauch- oder Spritzbeschichtungsanlage mit Metallionen, die z.B. über einen Ionentauscher aus den betroffenen Zonen entfernt werden müssen. Zudem beruht die Methode auf einem chemischen Abscheidungsprozess, der nicht selbstregulierend ist und nicht bei Bedarf abgebrochen werden kann, wie z. B. durch das Ausschalten des elektrischen Stromes bei den elektrophoretischen Verfahren. Somit ist das Ausbilden einer zu hohen Schichtdicke bei einer längeren Verweildauer der metallischen Substrate in den aktiven Zonen unvermeidbar.

Es ist ein lange verfolgter Wunsch, eine möglichst homogene und möglichst gleichmäßig dicke Beschichtung in einem Tauchverfahren effizient und kostengünstig mit einer wässerigen Zusammensetzung wie einer Dispersion oder einer Lackformulierung in einem möglichst einfachen Herstellungsverfahren auszubilden. Denn es fehlen bisher möglichst einfache Verfahren zur Ausbildung einer solchen organischen Beschichtung, bei der in einem Verfahrensschritt eine Beschichtung stromlos abgeschieden wird, die nach dem Trocknen eine Trockenfilmdicke von mehr als 5 µm aufweist und bei der keine aus dem Substratmaterial herausgelösten Ionen zur Bildung der Folgeschicht verwendet werden. Zudem stellt die Multimetallfähigkeit ein weiteres Herausstellungsmerkmal der vorliegenden Erfindung dar. Hierbei werden zwar die herausgelösten Ionen, aber nicht eine vorher aufgebrachte Aktivierungsschicht verwendet.

Ähnlicher Stand der Technik geht aus US 2003/082391 und Shi et al., Progress in Polymer Science, Bd. 29, Nr 10, 1.10.2004, Seiten 987-1019 hervor.

### Aufgabe:

Es besteht daher die Aufgabe, ein Verfahren vorzuschlagen, mit dem über ein flüssiges System in einem stromlosen Abscheideverfahren organische Beschichtungen auf insbesondere metallischen Oberflächen erzeugt werden können, die bei Bedarf spülresistent ausgebildet werden. Vorzugsweise soll hierzu als wässerige Zusammensetzung eine Dispersion und/oder Lackformulierung verwendet werden. Die Beschichtung soll möglichst homogen und flächendeckend aufgebracht werden. Sie soll auf einfache Weise in möglichst einem Verfahrensschritt abgeschieden werden. Es wäre vorteilhaft, wenn hierbei eine Beschichtung aufgebracht werden könnte, die einen Trockenfilm von mindestens 8 µm oder von mindestens 10 µm Dicke ergibt. Es wäre außerdem vorteilhaft, wenn diese Beschichtung als Ersatz für einen Elektrotauchlack dienen könnte. Es bestand ferner die Aufgabe, ein möglichst einfaches mehrstufiges Verfahren hierfür vorzuschlagen.

### Lösung:

Die Aufgabe wird gelöst
mit einem Verfahren zum stromlosen Beschichten von Substraten umfassend die Schritte oder bestehend aus den Schritten:
I. Bereitstellen eines Substrats,
III. Aufbringen einer Aktivierungsschicht,
V. Spülen der Aktivierungsschicht, wobei die Aktivierungsschicht nicht gänzlich entfernt wird,
VI. Kontaktieren und Beschichten der nach dem Spülen verbliebenen aktivierten Oberflächen mit einer wässerigen Zusammensetzung in Form einer Lösung, Emulsion oder Suspension zum Ausbilden einer organischen Folgeschicht (= Fällungsschicht),
VII. Spülen der Folgebeschichtung,
VIII. Trocknen und/oder Vernetzen der Beschichtung,
dadurch gekennzeichnet, dass
die Aktivierungsschicht aus einem oder mehreren anionischen Polyelektrolyten ausgewählt aus der Gruppe bestehend aus Polyacrylsäure, mit Silan modifizierter Polyacrylsäure, mit Silanverbindung(en) modifizierter Polyacrylsäure, Polyacrylsäure-Maleinsäure-Copolymer, mit Silan modifiziertem Polyacrylsäure-Maleinsäure-Copolymer, mit Silanverbindung(en) modifiziertem Polyacrylsäure-Maleinsäure-Copolymer, Polyacrylsäure-Acrylamid-Copolymer, mit Silan modifiziertem Polyacrylsäure-Acrylamid-Copolymer, mit Silanverbindung(en) modifiziertem Polyacrylsäure-Acrylamid-Copolymer, Polystyrolsulfonsäure, Polyvinylsulfonsäure, Polyphosphorsäure und Gemischen davon gebildet wird,
und
dass die wässerige Zusammensetzung zum Ausbilden einer Folgeschicht fällbare, niederschlagbare und/oder aussalzbare Bestandteile aufweist, die anionisch, zwitterionisch, sterisch und/oder kationisch stabilisiert sind, bei der sich anionisch und kationisch stabilisierte Bestandteile in der wässrigen Zusammensetzung nicht beeinträchtigen, und
dass der dabei oder später ausgebildete Trockenfilm aus der Folgeschicht oder aus der Aktivierungsschicht und der Folgeschicht eine Dicke von mindestens 1 µm aufweist,
und die weiter unten beschriebenen Verfahren und Verwendungen, sowie deren bevorzugte und/oder vorteilhafte Ausgestaltungen.

### Begriffsdefinitionen:

Im Rahmen der vorliegenden Erfindung schließt der Begriff "und/oder" sowohl jedes beliebige Element, als auch alle Kombinationen der in der jeweiligen Auflistung genannten Elemente ein.

Im Rahmen der vorliegenden Erfindung sind alle Mengenangaben, sofern nicht anders angegeben, als Gewichtsangaben zu verstehen.

Der Begriff "Fest- und Wirkstoffe" gibt an, dass neben den in einer flüssigen Zusammensetzung fest vorliegenden Feststoffen auch andere Substanzen vorliegen können, die hier Wirkstoffe genannt werden und erst aufgrund einer chemischen Reaktion oder aufgrund geänderter chemischer und/oder physikalischer Bedingungen zu Feststoffen werden und sich daher z.B. durch ihre gebundenen chemischen Gruppen an der Ausbildung einer festen Beschichtung beteiligen.

Im Rahmen der vorliegenden Erfindung bedeutet der Begriff "Raumtemperatur" eine Temperatur im Bereich von 15 bis 28°C.

Der Begriff "Vorbehandlung" bedeutet eine Behandlung (= Kontaktieren der zu beschichtenden Oberflächen mit einer üblicherweise flüssigen Zusammensetzung), auf die anschließend, gegebenenfalls nach einem nachfolgenden Beschichten, eine weitere Beschichtung zum Schützen der Schichtabfolge und des Gegenstandes wie z.B. mindestens ein Lack aufgebracht wird.

Der Begriff "Lösung" umfasst auch kolloidale Lösungen im Sinne dessen, was in Römpp Lexikon Chemie unter dem Begriff "Kolloidchemie" beschrieben ist.

Der Begriff "stromloses Beschichten" im Sinne dieser Anmeldung bedeutet, dass beim Beschichten von Substraten mit einer Lösung und/oder Dispersion (= Suspension und/oder Emulsion) enthaltenden Zusammensetzung - im Gegensatz zu den bekannten elektrophoretischen Verfahren - zum Ausbilden einer Aktivierungsschicht und/oder einer Folgeschicht entweder von außen keine elektrische Spannung angelegt wird oder bei einer weitgehend stromlosen Ausführungsform des Beschichtens eine geringe elektrische Hilfsspannung angelegt wird, die das Verfahren unterstützt und gegebenenfalls die hierbei ausgebildete Schicht verbessert, aber nicht die Ausfällung oder Reaktion auslöst.

Der Begriff "zu beschichtende Oberfläche(n)" im Sinne dieser Anmeldung bedeutet Oberflächen von insbesondere metallischen und/oder organischen Gegenständen, die gegebenenfalls z.B. mit einer metallischen Beschichtung wie z.B. auf Basis von Zink oder Zinklegierung und/oder mit mindestens einer Beschichtung einer Vorbehandlungs- oder Behandlungszusammensetzung wie z.B. auf Basis von Chromat, Cr³⁺, Komplexfluoriden, Ti-Verbindungen, Zr-Verbindungen, Silan/Silanol/Siloxan, Polysiloxan, organischem Polymer/Co-polymer und/oder deren Reaktionsprodukten vorbeschichtet sein können. In manchen Ausführungsformen werden am gleichen Bauteil und/oder nacheinander oder gleichzeitig in der gleichen Anlage Oberflächen von metallischen und/oder organischen Gegenständen und/oder Materialien beschichtet. Beispielsweise können bei einer einzigen Karosserie gleichzeitig Kunststoff- und metallische Oberflächen und/oder metallische Oberflächen von verschiedenen metallischen Materialien wie z.B. Stahl, verzinktem Stahl und/oder Aluminiumlegierung auftreten. Ebenso kann ein Mix von verschiedenen Materialien in einer Beschichtungsanlage beschichtet werden. Der Begriff "Silan" umfasst auch die hieraus entstehenden Silanole und Siloxane, weshalb auch der Begriff "Silan/Silanol/Siloxan" verwendet wird. Während sich die Silanole im Kontakt mit Feuchtigkeit und Wasser bilden, können sich hieraus im Wasser und beim Trocknen Siloxane bilden.

Der Begriff "Aktivierungsschicht" im Sinne dieser Anmeldung bezieht sich auf die mit dem Aktivierungsmittel ausgebildete Beschichtung sowohl in nassem, als auch in getrocknetem und/oder vernetztem Zustand. Dies Einschließlich des Nassfilms des Aktivierungsmittels, des angetrockneten Films, des gut getrockneten Films und des gegebenenfalls des bei erhöhter Temperatur getrockneten Films, des gegebenenfalls chemisch modifizierten Films, des gegebenenfalls mit einem Fixierhilfsmittel fixierten Films und des gegebenenfalls thermisch und/oder durch Bestrahlung weiter vernetzten Films. Als aktivierende Substanzen im Aktivierungsmittel werden insbesondere Polyelektrolyte und/oder Salze eingesetzt.

Als "Aktivieren" wird die Fähigkeit bezeichnet, in einem folgenden Verfahrensschritt wie z.B. einem Tauchschritt eine stabile wässerige Lösung und/oder Dispersion nahe der Oberfläche der Aktivierungsschicht zum Ausfällen, zum Aussalzen und/oder zum Niederschlagen von aktivierenden Substanzen zu bringen. Bei dem erfindungsgemäßen Verfahren wird hierdurch eine Voraussetzung geschaffen, dass eine Folgeschicht auf der Aktivierungsschicht, auf der verbliebenen Aktivierungsschicht und/oder auf dem von Aktivierungsmittel teilweise oder weitgehend befreiten Substrat ausgebildet werden kann.

Der Begriff "Polyelektrolyte" im Sinne dieser Anmeldung beschreibt wasserlösliche, anionische oder kationische Verbindungen mit meist großer Kettenlänge, die insbesondere als verzweigte und/oder lineare Polymere und/oder Copolymere eine Kette, ein Rückgrat und/oder ein Dendrimer enthalten und Molekulargewichte insbesondere im Bereich von 200 g/Mol bis 20 Millionen g/Mol aufweisen können.

Die Begriffe "latent anionisch" und "latent kationisch" bezeichnen teilweise verborgene und/oder zeitweise auftretende ionische Verhaltensweisen. Dies beinhaltet Substanzen mit stark polarisierenden Gruppen wie Alkoholen, die, obwohl sie laut Definition nicht ionisch sind, im Sinne der Anmeldung eine Fällung auslösen können wie z. B. Polyvinylalkohole oder Polyethylenglykole. Die Begriffe" permanent anionisch" und "permanent kationisch" bezeichnen auftretende und/oder offenkundige ionische Verhaltensweisen. Offenkundig bedeutet hierbei im Sinne dieser Anmeldung Verbindungen oder Atome, die über Ionen verfügen oder per se ein solches sind (z.B. Metallsalze). In der Regel wird im vorliegenden Text nicht zwischen latentem und permanentem Verhalten unterschieden.

Der Begriff "spülfest" im Sinne dieser Anmeldung bedeutet, dass unter den Bedingungen der jeweiligen Anlage und Verfahrensabfolge die jeweils letzte Beschichtung wie z.B. a) eine Aktivierungsschicht und/oder b) eine Folgeschicht durch einen Spülvorgang (= Spülen) nicht gänzlich entfernt wird und damit bei a) seine aktivierende Wirkung für die folgende Beschichtung bzw. bei b) die mittels Ausfällen, Koagulation, Aussalzen und/oder Niederschlagen hergestellte Folgeschicht nicht gänzlich entfernt wird. So kann beispielsweise eine gegebenenfalls getrocknete Beschichtung hergestellt werden, vorzugsweise eine geschlossene Beschichtung.

Die Begriffe "Ausfällen" und "Fällungsreaktion" im Sinne dieser Anmeldung beschreiben chemische Reaktionen, bei denen die Edukte in einem Lösungsmittel wie insbesondere Wasser gelöst und/oder dispergiert vorliegen und bei denen mindestens ein Reaktionsprodukt in diesem Lösungsmittel unlöslich oder schwerlöslich ist.

Beim Ausfällen wird eine Stabilisierung aufgehoben.

Der Begriff "Koagulation" im Sinne dieser Anmeldung beschreibt das Zusammenballen von Teilchen, also die zumindest teilweise Aufhebung von kolloidalen und/oder feinst verteilten Zuständen wie z.B. das Ausscheiden und/oder Zusammenklumpen insbesondere von kolloidalen, suspendierten und/oder emulgierten Substanzen, die Chemokoagulation durch Säuren oder Laugen, das Ausfällen von Ampholyten am isoelektrischen Punkt und/oder das Ausfällen von Substanzen durch Ultraschall-Koagulation. Die Koagulation ist oft ein Teilschritt des Niederschlagens von Fällungsprodukten und feinsten Partikeln.

Der Begriff "Niederschlagen" betrifft insbesondere ein Abwärtsbewegen und Absetzen von in der wässerigen Zusammensetzung bereits vorhandenen Partikeln. Das Niederschlagen kann durch eine Koagulation von Partikeln verstärkt werden und kann auch kolloidale Partikel, Ausfällungen und/oder das Ausbilden eines Niederschlags betreffen.

Der Begriff "Aussalzen" im Sinne dieser Anmeldung beschreibt eine Salzbildung durch Ausbildung eines meist kristallinen Fällungsprodukts und/oder Niederschlags.

Der Begriff "Formulierung" umfasst mehrkomponentige Gemische als wässerige Zusammensetzungen, die spezifisch zusammengesetzt sind und beispielsweise als Lackformulierung auf bestimmte Eigenschaften eingestellt ist.

Der Begriff "Polymer(e)" im Sinne dieser Anmeldung bedeutet Oligomer(e), Polymer(e) und Copolymer(e), deren Gemische und insbesondere auch deren Compoundierungen auf organischer und/oder weitgehend organischer Basis.

Üblicherweise liegt/liegen die "Polymer(e)" im Sinne dieser Anmeldung vorwiegend oder gänzlich als Polymer(e) und/oder Copolymer(e) vor.

Der Begriff "Copolymere" im Sinne dieser Anmeldung beschreibt Polymere, die aus zwei oder mehr verschiedenartigen Monomereinheiten zusammengesetzt sind. Hierbei können Copolymere in fünf Klassen unterteilt werden, wie anhand eines binären Copolymers, das aus zwei verschiedenen Comonomeren A und B aufgebaut ist, veranschaulicht wird:
1. Statistische Copolymere, in denen die Verteilung der beiden Monomere in der Kette, im Rückgrat und/oder im Dendrimer zufällig ist (AABABBBABAABBBABBABAB....);
2. Gradient-Copolymere, prinzipiell den statistischen Copolymere ähnlich, jedoch mit veränderlichem Anteil eines Monomers im Verlauf der Kette, des Rückgrats und/oder des Dendrimers (AAAAAABAABBAABABBBAABBBBBB);
3. Alternierende Copolymere mit einer regelmäßigen Anordnung der Monomeren entlang der Kette, des Rückgrats und/oder des Dendrimers (ABABABABABABABABABAB....);
4. Blockcopolymere, die aus längeren Sequenzen oder Blöcken jedes Monomers besteht (AAAAAAAAABBBBBBBBBBBB...), wobei je nach Anzahl der Blöcke man auch von Diblock-, Triblock-, Multiblock-Copolymeren spricht;
5. Pfropfcopolymere, bei denen Blöcke eines Monomers auf die Blöcke, die Kette, das Rückgrat und/oder das Dendrimer eines anderen Monomers aufgepfropft sind.

Der Begriff "Derivate" im Sinne dieser Anmeldung bezeichnet einen abgeleiteten Stoff ähnlicher Struktur zu einer entsprechenden Grundsubstanz. Derivate sind Stoffe, deren Moleküle an Stelle mindestens eines H-Atoms oder mindestens einer funktionellen Gruppe mindestens ein anderes Atom oder mindestens eine andere Atomgruppe besitzen und/oder bei denen ein oder mehrere Atome/Atomgruppen entfernt wurden.

Der Ausdruck "(Meth)acryl" soll im Rahmen der vorliegenden Erfindung Methacryl, Acryl und/oder Mischungen beider umfassen.

Der Begriff "compoundierte Partikel" bezeichnet Partikel, die aus verschiedenen Substanzen aufgebaut sind und oft eine speziell optimierte Zusammensetzung aufweisen.

Der Begriff "wasserunlösliche Partikel" im Sinne dieser Anmeldung bedeutet, dass die Wasserlöslichkeit der Partikel so gering ist, dass kein Übertritt oder nur ein Übertritt von einzelnen Bestandteilen der Partikel wie die an der Partikeloberfläche anhaftende Stabilisierung und/oder geringe Mengen der Substanz der Partikel in die wässerige Phase bei Raumtemperatur von bis zu 10 Gew.-%, vorzugsweise von bis zu 5 Gew.-%, von bis zu 2 Gew.-% oder von bis zu 1 Gew.-% innerhalb eines Tages auftritt. Zu diesen wasserunlöslichen Partikeln gehören auch "stabilisierte Partikel", bei denen die Stabilisierung in der wässerigen Phase erfolgt und/oder vorliegt. Die Stabilisierung kann auf der Partikeloberfläche beispielsweise mit einem nichtionischen und/oder ionischen Emulgator, mit Ionen, mit einem Verlaufsmittel und/oder mit einem Verdickungsmittel eingestellt sein.

Der Begriff "langkettig" umfasst im Rahmen der vorliegenden Erfindung Kohlenstoffketten mit 4 oder mehr, bevorzugt vier bis 20, insbesondere sechs bis 18, Kohlenstoffatomen.

### Detaillierte Beschreibung:

Im Rahmen der vorliegende Erfindung werden in Verfahren zum Beschichten von Oberflächen von Gegenständen, die gegebenenfalls vorbeschichtet sein können (= zu beschichtende Oberflächen), die zu beschichtenden Oberflächen zuerst mit einem Aktivierungsmittel aktiviert. Hierbei wird mit dem Aktivierungsmittel auf den zu beschichtenden Oberflächen eine spülfeste Schicht (= Aktivierungsschicht) mit einer ersten wässerigen Zusammensetzung ausgebildet, vorzugsweise mit einer stabilen wässerigen Zusammensetzung in Form einer Lösung und/oder Dispersion (= Suspension und/oder Emulsion). Hierbei wird z.B. mittels anionischem Fällungspotenzial eine Fällungsreaktion, ein Koagulieren, ein Aussalzen von in einem Lösungsmittel gelösten Substanzen und/oder ein Niederschlagen von Partikeln und/oder von kolloidalen, feinsten und/oder feinen Partikeln herbeigeführt. Dann wird eine zweite, gegebenenfalls spülfeste Schicht (= Folgeschicht = Fällungsschicht) auf der aktivierten (= mit aktivierender Substanz beschichteten) Oberfläche ausgebildet. Da hierbei mehrwertige Ionen und/oder Moleküle mit mehreren anionischen oder mehreren kationischen Funktionen (polyfunktionelle Moleküle) ein höheres Fällungspotenzial aufweisen können und stärker koagulieren können als einwertige Anionen, als einwertige Kationen und/oder als monofunktionelle Moleküle, sind erstere in einem Aktivierungsmittel bevorzugt. Dies gilt für entgegengesetzt geladene Ionen und Moleküle in einem Elektrolyten.

Überraschenderweise wurde gefunden, dass auch anionische Polyelektrolyte zur Fällung einer anionisch stabilisierten Dispersion führen können.

Das erfindungsgemäße Verfahren kann sich vorzugsweise dadurch auszeichnen, dass die Ionen, Komplexe und/oder Verbindungen der Aktivierungsschicht in die wässerige Zusammensetzung zum Ausbilden der Folgeschicht eindiffundieren können und/oder in Wechselwirkung und/oder in Reaktion treten können und/oder dass die erste Schicht (= Aktivierungsschicht) zumindest teilweise aufgelöst und/oder abgelöst wird, wobei nicht unbedingt Substanz der ersten Schicht in die Folgeschicht aufgenommen werden muss. Bei dem erfindungsgemäßen Verfahren kann die zweite wässerige Zusammensetzung zum Ausbilden einer Folgeschicht (= Fällungsschicht) vorzugsweise mindestens eine fällbare Substanz, mindestens eine Art niederschlagbarer Partikel und/oder mindestens eine niederschlagbare Verbindung enthalten.

In einzelnen erfindungsgemäßen Ausführungsformen kann zum Ausbilden einer Aktivierungsschicht vorzugsweise zusätzlich eine Hilfsspannung, insbesondere von weniger als 100V angelegt werden, wobei die Hilfsspannung eine Ionenwanderung bewirkt, aber nicht ein Ausfällen, nicht ein Niederschlagen und/oder nicht ein Aussalzen auslöst. Diese Hilfsspannung kann das Ausbilden der Aktivierungsschicht beschleunigen und/oder die Schichtqualität verbessern. Bei dem erfindungsgemäßen Verfahren kann die mindestens eine fällbare Substanz, die mindestens eine Art niederschlagbarer Partikel und/oder die mindestens eine niederschlagbare Verbindung vorzugsweise mit den Ionen, Komplexen und/oder Verbindungen der Aktivierungsschicht eine Fällungsreaktion und/oder eine Aussalzungsreaktion eingehen, wobei eine Folgeschicht aus gefällten und/oder niedergeschlagenen Substanzen auf der Aktivierungsschicht ausgebildet wird.

Bei einem bevorzugten erfindungsgemäßen Verfahren kann die Folgeschicht verfilmt und/oder vernetzt werden, kann die Folgeschicht chemisch und/oder thermisch behandelt werden, um die Substanzen auf dem Substrat aufzubringen und/oder zu fixieren, und/oder kann die Folgeschicht weiter beschichtet werden.

Die zu beschichtenden Gegenstände können solche aus jedem beliebigen Material sein. Bevorzugt weisen die Gegenstände Oberflächen aus Metall, Legierung, Kunststoff, Verbundwerkstoff, Naturwerkstoff, Glas und/oder Keramik auf. Als Gegenstände können auch jegliche metallischen Gegenstände dienen, die vor Korrosion zu schützen sind. Es können jedoch grundsätzlich alle Gegenstände aus jeweils mindestens einem Kunststoff, Verbundwerkstoff, Naturwerkstoff, Glas, Keramik und/oder metallischem Werkstoff sowie deren Kombinationen sein, die gegebenenfalls schon beschichtet sind und/oder die jetzt beschichtet werden sollen. Beispielsweise lassen sich Kunststoffelemente z.B. für Karosserien, Stoßstangen, Geräte und Gebäude in erfindungsgemäßer Weise beschichten. Elemente aus metallischen Materialien können auch mit solchen aus anderen Materialien wie z.B. Kunststoff verbunden sein.
Als Oberflächen bzw. Substrate können grundsätzlich in Schritt I. Oberflächen von allen Arten von Werkstoffen - gegebenenfalls auch von mehreren verschiedenartigen Werkstoffen benachbart und/oder nacheinander im erfindungsgemäßen Verfahren - eingesetzt werden. Unter den metallischen Werkstoffen sind grundsätzlich alle Arten von metallischen Werkstoffen möglich, insbesondere solche aus Aluminium, Eisen, Kupfer, Magnesium, Titan, Zink, Zinn und/oder deren Legierungen mit einem Gehalt an Aluminium, Eisen, Stahl, Kupfer, Magnesium, Nickel, Titan, Zink und/oder Zinn. Die Werkstoffoberflächen können gegebenenfalls auch vorbeschichtet werden und/oder sein, beispielsweise mit Zink oder einer Aluminium und/oder Zink enthaltenden Legierung. Das metallische Substrat kann gegebenenfalls mit einem Kunststoffbauteil verbunden sein.
Als zu beschichtende Gegenstände können grundsätzlich alle Arten von Gegenständen eingesetzt werden, insbesondere solche aus mindestens einem metallischen Werkstoff und/oder mit mindestens einer metallischen Beschichtung.

Besonders bevorzugte Gegenstände sind insbesondere Bänder (Coils), Bleche, Teile wie z.B. Kleinteile, gefügte Komponenten, kompliziert geformte Komponenten, Profile, Stäbe und/oder Drähte aus Metall und/oder Legierung. In verschiedenen Ausführungsformen sind die Substrate vorbeschichtet; beispielsweise mit mindestens einer Beschichtung von mindestens einer metallischen, nichtmetallisch-anorganischen oder organischen Beschichtung z.B. einer Feuerverzinkungs-, Zinklegierungs- oder Aluminiumlegierungsschicht, mindestens einer Vorbehandlungsschicht z.B. auf Basis von Phosphat, Silan/Silanol/Siloxan, Titanverbindung und/oder Zirkoniumverbindung, mindestens einer elektrolytisch aufgebrachten Beschichtung z.B. einer Anodisierschicht, mindestens einer nachträglich aufgebrachten Schicht zum Abdichten und/oder Modifizieren der darunter liegenden Beschichtung, mindestens einer organischen Beschichtung z.B. einer Primerschicht und/oder einer Lackschicht. Auch auf beispielsweise organischen Substraten kann beispielsweise mindestens eine Beschichtung z.B. eine antistatische Schicht, metallische Schicht, Lackschicht und/oder Versiegelungsschicht aufgebracht sein.

Bei einer vorherigen Vorbehandlung vor einer Aktivierung einer Oberfläche mit einem Aktivierungsmittel, können die zu behandelnden Oberflächen bei Bedarf zuerst alkalisch gereinigt, sauer gebeizt und/oder mit Wasser gespült werden und gegebenenfalls mit einer Zusammensetzung zur Vorbehandlung kontaktiert werden, letzteres insbesondere um eine Konversionsschicht auszubilden. Dann können die derart behandelten und/oder beschichteten Oberflächen gegebenenfalls mit einem Primer und/oder mit einer gegebenenfalls umformbaren Schutzschicht, insbesondere mit einem Korrosionsschutzprimer, beschichtet und/oder gegebenenfalls beölt werden. Eine Beölung dient insbesondere dem vorübergehenden Schutz der behandelten und/oder beschichteten insbesondere metallischen Oberflächen, z.B. wenn diese zwischengelagert werden sollen.

Als Vorbehandlung ist grundsätzlich jede Art der Vorbehandlung möglich: Es können beispielsweise wässerige Vorbehandlungszusammensetzungen auf Basis von Phosphat, Phosphonat, Silan/Silanol/Siloxan, Polysiloxan, Lanthanidverbindung, Titanverbindung, Hafniumverbindung, Zirkoniumverbindung, Zinkpartikeln, Säuren wie Vnylphosphonsäuren, Metallsalz, Wasserglas und/oder organischem Polymer eingesetzt werden.
In vielen Ausführungsformen müssen die Oberflächen von metallischen Substraten und/oder von metallischen Beschichtungen zuerst gereinigt werden, beispielsweise durch eine alkalische Reinigung wie z.B. Entfettung und/oder durch ein saures Beizen, wobei anschließend mit Wasser zu spülen ist. Wenn ein metallisches Substrat frisch hergestellt ist und/oder wenn eine metallische Beschichtung frisch aufgebracht ist, braucht in der Regel nicht gereinigt zu werden. Andererseits empfiehlt es sich in vielen Ausführungsformen, auch andersartige Oberflächen z.B. von Kunststoffen zu reinigen, beispielsweise von Schmutz und Staub, und gegebenenfalls antistatisch zu behandeln.

Das Aktivieren dient der Vorbereitung der mit einer Folgeschicht zu beschichtenden Substrate, wobei die mindestens eine aktivierende Substanz der Aktivierungsschicht oder der nach einem Spülen verbliebenen Aktivierungsschicht zu einem Ausfällen, Aussalzen und/oder Niederschlagen von Partikeln beiträgt, wodurch eine Folgeschicht ausgebildet wird. In vielen Ausführungsformen ist es erwünscht, dass die Folgeschicht eine möglichst große Trockenfilmdicke aufweist und möglichst in einem Verfahrensschritt ausgebildet wird.
Bei dem erfindungsgemäßen Verfahren wird mindestens eine Aktivierungsschicht mit dem wässerigen Aktivierungsmittel ausgebildet, das mindestens eine aktivierende Substanz enthält. Die Aktivierungsschicht ist vorzugsweise spülfest.
Das Aktivierungsmittel und/oder die hieraus gebildete Aktivierungsschicht enthält/enthalten als aktivierende Substanz(en) mindestens einen Polyelektrolyten, mindestens einen chemisch modifizierten Polyelektrolyten, mindestens ein anorganisches Salz, mindestens ein organisches Salz, mindestens einen Komplexbildner, mindestens einen Komplex, mindestens eine Säure und/oder mindestens eine Base, die sich nicht wechselseitig beeinträchtigen. Die mindestens eine aktivierende Substanz wirkt vorzugsweise als Fällungsmittel, als Aussalzungsmittel und/oder als Mittel zum Niederschlagen.

Die Polyelektrolyte sind hierbei vorzugsweise wasserlösliche anionische Verbindungen mit meist großer Kettenlänge. Sie sind insbesondere ein organisches Polymer und/oder Copolymer, das eine Kette, ein Rückgrat und/oder ein Dendrimer aufweist. Sie sind in vielen Ausführungsformen verzweigte und/oder lineare Polymere und/oder verzweigte und/oder lineare Copolymere. Die Polyelektrolyte weisen vielfach Molekulargewichte auf im Bereich von 200 g/Mol bis 20 Millionen g/Mol, bevorzugt im Bereich von 500 g/Mol bis 12 Millionen g/Mol, von 2.000 g/Mol bis 8 Millionen g/Mol oder von 12.000 g/Mol bis 5 Millionen g/Mol, besonders bevorzugt im Bereich von 50.000 g/Mol bis 3 Millionen g/Mol oder von 200.000 g/Mol bis 2 Millionen g/Mol. In einigen Ausführungsformen können die Polyelektrolyte Molekulargewichte im Bereich von 1.000 bis 800.000 g/Mol, von 8.000 bis 300.000 g/Mol oder von 30.000 bis 150.000 g/Mol aufweisen. In einigen anderen Ausführungsformen können die Polyelektrolyte Molekulargewichte im Bereich von 12.000 bis 16.000.000 g/Mol, von 28.000 bis 14.000.000 g/Mol, von 80.000 bis 9.500.000 g/Mol oder von 120.000 bis 7.000.000 g/Mol aufweisen. Hierbei kann es hilfreich sein, bei stark wasserlöslichen Polyelektrolyten Maßnahmen zur Verbesserung der Spülfestigkeit zu treffen, z.B. mit chemischer Modifizierung des Polyelektrolyten, durch den Zusatz eines Fixierhilfsmittels wie z.B. eines Haftvermittlers und/oder Verdickungsmittels, mit einem Zwischentrocknen und/oder mit einer Vernetzung des Polyelektrolyten. Insbesondere mindestens ein Polyelektrolyt und/oder mindestens ein Bestandteil eines Polyelektrolyten kann beispielsweise mit Haftgruppen chemisch modifiziert sein, z.B. aus einer Reaktion eines Polyelektrolyten und/oder der Vorstufe eines Polyelektrolyten mit einem Haftvermittler und/oder mit haftvermittelnden Gruppen, z.B. durch Aufnahme von chemischen Gruppen und/oder durch Ein- und/oder Copolymerisieren.

Als Modifizierungen von Polyelektrolyten haben sich insbesondere Polyelektrolyte mit Haftgruppen besonders bewährt.

Als bei einem anionischen Polyelektrolyten Haftung vermittelnde Haftgruppen können chemische Gruppen dienen ausgewählt aus der Gruppe bestehend aus Silanen sowie den hieraus gebildeten Silanolen und/oder Siloxanen wie z.B. auf Basis von Alkoxysilanen, Aminosilanen, Epoxysilanen und Vinylsilanen. Hierbei ist zu berücksichtigen, dass obwohl die funktionellen Gruppen bei unterschiedlichen der genannten Haftgruppen identisch sind, aufgrund der tertiären Struktur Haftungsunterschiede auftreten können.

Grundsätzlich können die Haftgruppen über Additions- und/oder Substitutionsreaktionen kovalent mit dem Fachmann bekannten üblichen Reaktionen wie z.B. über jeweils mindestens eine Veresterungsreaktion, eine Kopplung, eine Doppelbindung und/oder einen Alkohol an einen Polyelektrolyten gebunden werden/sein. Als Silane einschließlich der entsprechenden hieraus gebildeten Silanole und/oder Siloxane (= Silane/Silanole/Siloxane) eignen sich insbesondere Alkoxysilane mit mindestens einer Epoxygruppe, mit mindestens einer Isocyanatogruppe und/oder mit mindestens einer radikalisch wirkenden Doppelbindung. Vorzugsweise wird zum Ausbilden einer Aktivierungsschicht mindestens ein modifizierter Polyelektrolyt verwendet, der mit einem Silan/Silanol/Siloxan mit einem Kondensationsgrad im Bereich von 1 bis 30 oder von 1 bis 20 Monomereinheiten pro Molekül modifiziert wurde. Allgemein können diese Siliciumverbindungen hierbei z.B. über jeweils mindestens eine Aminogruppe, Carboxylgruppe, Isocyanatgruppe, Epoxygruppe, Hydroxylgruppe und/oder über mindestens eine Doppelbindung an die Kette, das Rückgrat und/oder das Dendrimer des Polyelektrolyten angekoppelt werden/sein.

Als Derivate von Polyelektrolyten haben sich insbesondere Polyelektrolyte mit Silan-/Silanol-/Siloxan-, Polysiloxan-Gruppen sowie deren Oligomere, Polymere und Copolymere mit mittellangen und/oder langkettigen (= mit mehr als 4 C-Atomen) hydrophoben Polymeren modifizierte Polyelektrolyte bewährt. Auch die Derivate können in vielfältiger Weise Copolymere wie z.B. insbesondere durch Addition während der Polymerisation von dem Fachmann bekannten Kopplungsgruppen von insbesondere Aziridinen mit insbesondere mehrfunktionellen Epoxiden, Alkoholen, Amiden, Estern, Isocyanaten, Iminen, Carbonsäuren, Thiolen, Acrylaten, Methacrylaten, Vinylen, Substanzen mit reaktiven Doppelbindungen und/oder Dreifachbindungen sein.

Überraschenderweise wurde gefunden, dass einzelne Polyelektrolyte bei manchen Kombinationen mit einer wässerigen kationischen oder anionischen Zusammensetzung zum Ausbilden einer Folgeschicht je nach Stabilisierung vorab benannter wässeriger Zusammensetzung, in ihrem Wirkungscharakter sowohl kationisch, als auch anionisch wirken können. D. h. bei gleichen Salzen kann sich grundsätzlich einmal der kationische und einmal der anionische Teil auf die Folgebeschichtung auswirken.

Wenn die wässerige Zusammensetzung zum Ausbilden der Folgeschicht kationisch stabilisiert ist, bewirkt der anionische Teil des Salzes z.B. die Fällung. Wenn die wässerige Zusammensetzung zum Ausbilden der Folgeschicht anionisch stabilisiert ist, bewirkt der kationische Teil des Salzes z.B. die Fällung. Hierbei entscheidet die Art der Stabilisierung, ob z.B die. fällende Wirkung des Salzes anionischer oder kationischer Natur ist und ob anionisch oder kationisch wirkende Salze vorliegen. Denn hierbei entscheiden ebenfalls anwesende Emulgatoren für die anionische oder kationische Wirkung und/oder ebenfalls anwesende ionische Gruppen wie z.B. Carboxylate über die anionische Wirkung oder z.B. quaternäre Ammoniumverbindungen über die kationische Wirkung. Die Emulgatoren sind Teil oder sogar Hauptbestandteil der Stabilisierung der Partikel und/oder der Dispersionen, die entweder anionisch oder kationisch vorliegen können. Die ionische Stabilisierung kommt entweder von ionischen Gruppen, die direkt in das Polymer eingearbeitet sind, und/oder von ionischen Emulgatoren. Die Emulgatoren weisen einen hydrophilen Teil auf, der entweder einen kationischen Charakter oder einen anionischen Charakter hat und somit entscheidet, ob das von ihnen stabilisierte Partikel und/oder die von ihnen stabilisierte Dispersion einen anionischen oder kationischen Charakter aufweist.

Die anionischen Polyelektrolyt enthaltenden Aktivierungsmittel können sehr unterschiedliche pH-Werte annehmen, vorzugsweise solche im Bereich von 3 bis 12, insbesondere pH-Werte im Bereich von 4 bis 11 oder 6 bis 10. Der anwendbare pH-Wert der aktivierenden Substanzen ist teilweise sehr substanzspezifisch und grundsätzlich bekannt.

Die wässerige Zusammensetzung (= Aktivierungsmittel) zum Ausbilden der Aktivierungsschicht weist vorzugsweise einen pH-Wert im Bereich von 2 bis 12, von 3 bis 11 oder von 3,5 bis 10 auf, wobei es oft vorteilhaft ist, die Substratoberfläche nicht oder nicht stärker anzubeizen und anzulösen (geringe oder hohe pH-Werte beizen und schaffen aktivierte metallische Oberflächen guter Reaktivität). Insbesondere, wenn das Aktivierungsmittel mindestens einen anionischen Polyelektrolyten enthält, liegt sein pH-Wert vorzugsweise im Bereich von 3 bis 12 oder 5 bis 10, besonders bevorzugt bei 6 bis 9. Die Zusammensetzung, mit der ein Aktivierungsmittel aufgetragen wird, hat bevorzugt einen pH-Wert im Bereich von 4 bis 7.
Bei der Auswahl des pH-Werts und der Konzentration der Zusammensetzung des Aktivierungsmittels ist es bevorzugt, dass es eine stabile Lösung ist, eine stabile Dispersion ist und/oder dass der Polyelektrolyt bei dem gewählten pH-Wert und bei seiner Konzentration noch in Form von Polykationen und nicht nur in der Form von ungeladenen Molekülen vorliegt.
Darüber hinaus können die Aktivierungsmittel neben Wasser und aktivierenden Substanzen bei Bedarf weitere Substanzen wie z.B. Alkohole und/oder Verdickungsmittel wie z.B. Cellulose, Polysaccharide, Welan Gum, Xanthan Gum und/oder Polysiloxane enthalten, vorzugsweise in einem Gesamtgehalt im Bereich von 0,05 bis 10 g/L oder von 0,3 bis 6 g/L. Darüber hinaus können das Aktivierungsmittel und/oder die Aktivierungsschicht auch andere Substanzen wie z.B. Füllstoffe, Mischungen wie Compoundierungen und Hilfsmittel wie z.B. schichtbildende Substanzen wie Schichtsilikate, Mittel zur Anpassung des pH-Werts, Haftvermittler wie z.B. Silane, Benetzungsmittel wie z.B. Tenside, Stabilisierungsmittel, Thixotropierungsmittel, Verdickungsmittel, Netzmittel, Entschäumer, Konservierungsmittel, Biozide und/oder Mittel zum Anpassen des pH-Werts zu niedrigeren und/oder höheren Werten enthalten. Vorzugsweise können das Aktivierungsmittel und/oder die Aktivierungsschicht darüber hinaus in manchen Ausführungsformen auch jeweils mindestens ein organisches Polymer, mindestens ein Amin, mindestens eine Art anorganischer und/oder organischer Partikel und/oder mindestens einen Farbstoff enthalten.

Vorzugsweise sind die Substanzen des Aktivierungsmittels und/oder der Aktivierungsschicht, insbesondere die Polyelektrolyte, weitgehend wasserlöslich oder vollständig wasserlöslich. Oder zumindest ein Teil der verschiedenen Substanzen des Aktivierungsmittels und/oder der Aktivierungsschicht ist wasserlöslich. Dann kann es schwierig sein, eine spülfeste Aktivierungsschicht herzustellen. Insbesondere die Wasserlöslichkeit, aber auch das hygroskopische Verhalten oder/und ein Korrosion förderndes Verhalten von elektrisch leitfähigen wässerigen Elektrolyt-Lösungen haben dazu beigetragen, dass im industriellen Bereich des Korrosionsschutzes selten Polyelektrolyte als Hauptbestandteile einer korrosionsschützenden Beschichtung eingesetzt werden.

Vorzugsweise enthält das Aktivierungsmittel einen Gehalt an mindestens einer aktivierenden Substanz wie Polyelektrolyt im Bereich von 90 bis 100 Gew.-% oder von 95 bis 99 Gew.-% der Fest- und Wirkstoffe.
Der Gehalt an mindestens einer aktivierenden Substanz in der ersten wässerigen Zusammensetzung (= Aktivierungsmittel) liegt häufig im Bereich von 0,01 bis 500 g/L. Vorzugsweise liegt dieser Gehalt im Bereich von 1 bis 400 g/L, von 3 bis 300 g/L, von 5 bis 240 g/L, von 8 bis 180 g/L, von 12 bis 150 g/L, von 18 bis 120 g/L, von 24 bis 96 g/L oder von 30 bis 70 g/L. In manchen Ausführungsformen liegt dieser Gehalt im Bereich von 0,5 bis 200 g/L, von 0,8 bis 150 g/L, von 1,2 bis 120 g/L, von 2 bis 90 g/L, von 4 bis 80 g/L, von 5 bis 70 g/L, von 6 bis 60 g/L, von 8 bis 50 g/L, von 10 bis 40 g/L oder von 20 bis 30 g/L. Der Gehalt an mindestens einer aktivierenden Substanz und an den weiteren enthaltenen Fest- und Wirkstoffen in der ersten wässerigen Zusammensetzung liegt häufig im Bereich von 0,01 bis 500 g/L. Vorzugsweise liegt dieser Gehalt im Bereich von 1 bis 420 g/L, von 3 bis 320 g/L, von 5 bis 260 g/L, von 8 bis 210 g/L, von 12 bis 170 g/L, von 18 bis 140 g/L, von 24 bis 110 g/L, von 30 bis 90 g/L oder von 40 bis 65 g/L. Vorzugsweise enthält das Aktivierungsmittel einen Gehalt an Polyelektrolyten im Bereich von 90 bis 100 Gew.-% oder von 95 bis 99 Gew.-% der Fest- und Wirkstoffe.
Das Aktivierungsmittel weist vorzugsweise einen Gehalt an mindestens einem anionischen Polyelektrolyten im Bereich von 0,02 bis 400 g/L, von 1 bis 250 g/L, von 10 bis 180 g/L, von 30 bis 140 g/L oder von 50 bis 110 g/L auf, in manchen Ausführungsformen jedoch im Bereich von 0,5 bis 60 g/L, von 2 bis 40 g/L oder von 6 bis 25 g/L.
Wenn der Gesamtgehalt an aktivierenden Substanzen im Aktivierungsmittel geringer als 0,01 g/L ist, wird üblicherweise eine zu geringe Aktivierungsschicht abgeschieden. Wenn der Gesamtgehalt an Substanzen oder an aktivierenden Substanzen im Aktivierungsmittel größer als 500 g/L ist, wird üblicherweise die Lösung zu viskos, als dass eine homogene Beschichtung des Werkstückes möglich wird.

Insgesamt ist beim Aufbringen der Aktivierung in manchen Ausführungsformen für eine Serienfertigung darauf zu achten, dass sowohl der pH-Wert der Badlösung des Aktivierungsmittels, als auch der Gehalt an Fest- und Wirkstoffen der aktivierenden Substanzen bei dem erfindungsgemäßen Verfahren in engen Bereichen konstant gehalten wird, wie ± 0,5 Punkte beim pH-Wert und/oder ± 20% oder ± 10% beim Gehalt an Fest- und Wirkstoffen. Wenn beim Aufbringen der Aktivierung die oben beschriebenen Grenzwerte beachtet werden, kann eine besonders gleichmäßige und reproduzierbare Schichtbildung stattfinden. Außerdem wird vorzugsweise darauf geachtet, dass nicht Anteile von Reinigerlösung in das Aktivierungsbecken verschleppt werden. Das Beschichten mit einer Aktivierungsschicht kann vorzugsweise bei Temperaturen zwischen 5 und 95°C erfolgen, besonders bevorzugt bei Raumtemperatur oder bei Temperaturen zwischen 15 und 50°C. Hierbei kann das Substrat in mehreren Ausführungsformen eine Temperatur im Bereich von 10 bis 180°C und insbesondere im Bereich von 40 bis 120°C oder von 60 bis 90°C aufweisen.

Die Aktivierungsschicht kann beispielsweise durch Aufwalzen, Fluten, Aufrakeln, Spritzen, Sprühen, Streichen und/oder Tauchen, auch z.B. Tauchen bei erhöhter Temperatur der wässerigen Zusammensetzung und/oder des Substrates, und gegebenenfalls durch nachfolgendes Abquetschen z.B. mit einer Rolle aufgetragen werden. Besonders bevorzugt ist auch für dieses Kontaktieren und Beschichten ein Auftrag durch ein Tauchverfahren. Besonders vorteilhaft für bestimmte industrielle Verfahrensabläufe und Anlagen ist es, wenn mindestens eine spülfeste Aktivierungsschicht auf dem Substrat ausgebildet wird. Die spülfeste Aktivierungsschicht kann auch aus mindestens zwei nacheinander aufgebrachten Aktivierungsschichten gebildet werden, gegebenenfalls mit einer Zwischentrocknung nach dem Aufbringen der ersten Aktivierungsschicht, wobei diese Aktivierungsschichten und ihre Aktivierungsmittel gegebenenfalls unterschiedliche chemische Zusammensetzungen aufweisen.

Bei einem Spülen der mit Aktivierungsmittel beschichteten Substrate soll die Aktivierungsschicht oft möglichst wenig entfernt werden und darf nicht vollständig entfernt werden. Daher ist es vorteilhaft, wenn die Aktivierungsschicht für die verwendeten Anlagen und Verfahrensabfolgen ausreichend spülfest ist. Beim Spülen der Aktivierungsschicht ist es erforderlich, dass diese beim Spülen nicht vollständig aufgelöst und/oder abgelöst wird. Daher ist es gewünscht, dass die Aktivierungsschicht ausreichend spülfest ist, um nach dem Spülen noch eine Restschichtdicke aufzuweisen (= verbliebene Aktivierungsschicht).

Hierbei ist es besonders bevorzugt, eine möglichst spülfeste Aktivierungsschicht aufzubringen. Die Spülfestigkeit wird beispielsweise durch den Zwischentrocknungsschritt nach dem Aktivieren, durch die chemische Modifizierung der Polyelektrolyte, durch die Auswahl mehrwertiger Salze/Ionen /Verbindungen und/oder durch die Auswahl schwerlöslicher Salze günstig beeinflusst. Andererseits kann die Spülfestigkeit der Aktivierungsschicht auch dadurch deutlich gesteigert werden, dass die Aktivierungsschicht vor dem Spülen zwischengetrocknet wird. Das Zwischentrocknen kann hierbei ein leichtes Antrocknen oder ein weitgehendes oder völliges Trocknen sein. Alternativ kann es empfehlenswert sein, die Aktivierungsschicht vor dem Spülen zu erwärmen, mindestens partiell chemisch zu modifizieren z.B. durch Umsalzen wie z.B. durch Ausbildung eines schwerer wasserlöslichen Salzes insbesondere an der Oberfläche der Aktivierungsschicht und/oder zu fixieren. Ferner kann die Aktivierungsschicht zum Spülen eine andere Temperatur und/oder einen anderen pH-Wert als die Spülflüssigkeit aufweisen. Jede Variante und jede beliebige Kombination aller dieser Maßnahmen kann helfen, den Abtrag des insbesondere gut wasserlöslichen Aktivierungsmittels aus der Aktivierungsschicht zu verringern oder sogar zu vermeiden.

Eine Art der Verbesserung der Spülfestigkeit der Aktivierungsschicht kann mit Haftvermittlern und/oder mit Haftung vermittelnden chemischen Gruppen erfolgen. Eine zweite Möglichkeit ist die Verwendung einer elektrischen Hilfsspannung beim Aufbringen einer Aktivierungsschicht z.B. von weniger als 100 V oder von weniger als 60 V oder von weniger als 30 V oder als 5 V, wobei eine gegebenenfalls eingesetzte elektrische Spannung nur als Hilfsanspannung verwendet wird, aber ein Ausfällen auslöst. Besonders bevorzugt wird dabei eine Hilfsspannung von weniger als 2,5 V, von weniger als 1 oder von weniger als 0,5 V insbesondere als Gleichspannung angelegt, wobei vorzugsweise nahezu kein Strom fließt. Im Falle eines Stromflusses beträgt die Stromstärke weniger als 0,1 A/dm² oder vorzugsweise weniger als 0,01 A/dm². Hierbei kann die Hilfsspannung z.B. eine Ionenwanderung, aber nicht ein Ausfällen, ein Niederschlagen und/oder ein Aussalzen auslösen. Diese Hilfsspannung kann das Ausbilden der Schicht beschleunigen und/oder verbessern. In den meisten Ausführungsformen wird jedoch keine elektrische Spannung von außen angelegt. Wenn ein Tauchlack aufgebracht werden soll, kann stromlos oder gegebenenfalls nur mit einer elektrischen Hilfsanspannung gearbeitet werden, aber die elektrische Hilfsspannung wird anders als bei einem Elektrotauchlack nicht zum Ausfällen, Niederschlagen oder Aussalzen einer wässerigen Zusammensetzung genutzt. Eine elektrische Hilfsspannung bewirkt offenbar eine Partikelmigration und somit eine Konzentrationserhöhung z.B. der zu ausfällenden Substanz und/oder der zu koagulierenden Partikel, aber sie bewirkt keine Trennung von Wasser und hierin enthaltenen Stoffen aufgrund des elektrischen Feldes und Stromes wie bei einer Elektrotauchlackierung. Ferner kann eine Spülflüssigkeit auch ein Fixierhilfsmittel zur Fixierung und/oder Modifizierung des Aktivierungsmittels z.B. durch einen Salzaustausch enthalten.
Da bei einem Spülvorgang oft ein Teil der frischen Beschichtung abgespült wird, ist es vorteilhaft, die restlichen Gehalte der Aktivierungsschicht z.B. an chemischen Elementen durch Röntgenfluoreszenzanalyse (RFA) zu überprüfen, insbesondere vor dem Aufbringen einer Folgebeschichtung. Hierbei zeigt die untere Nachweisgrenze für die Elemente Silizium, Titan, Zirkonium oder Mangan in der Größenordnung von 1 mg/m² den unteren Grenzwert an. Daher kann die Spülfestigkeit der Aktivierungsschicht bei Anwendung standardisierter Verfahrensbedingungen wie bei den Beispielen auch anhand der Messwerte der RFA bewertet werden.

Besonders bevorzugte aktivierende Substanzen in einem anionischen Aktivierungsmittel sind organisches Polymer und/oder Copolymer, das eine Kette, ein Rückgrat und/oder ein Dendrimer auf Basis von Polyacrylsäuren aufweist.
Potente Fällungsmittel sind auch Polyphosphorsäuren.

Ein Zwischentrocknen einer insbesondere frisch aufgebrachten Aktivierungsschicht vor dem Spülen ist eine Möglichkeit, eine Aktivierungsschicht beständiger gegen ein Spülen zu gestalten. Diese Art des Immobilisierens kann dazu führen, das bei einem standardisierten Spülen weniger als bei nicht zwischengetrockneten Aktivierungsschichten aufgelöst und/oder abgespült wird und daher eine dickere verbliebene Aktivierungsschicht zum nachfolgenden Aktivieren zur Verfügung steht. Hierbei können sich das Verdichten der Aktivierungsschicht, der geringe oder fehlende Wassergehalt der Aktivierungsschicht, die deutlichere Ausbildung der Grenzfläche auf der Aktivierungsschicht, eine Kristallisation oder stärkere Kristallisation des Aktivierungsmittels und/oder ein Verfilmen und/oder Vernetzen der Substanzen der Aktivierungsschicht auswirken. Insbesondere bei Salz-basierten Aktivierungsschichten ist häufig ein Zwischentrocknen notwendig.
Alternativ oder zusätzlich zu einem Zwischentrocknen kann ein Aktivierungsmittel eingesetzt werden, das mindestens eine mit Haftgruppen modifizierte Substanz wie einen mit Haftgruppen modifizierten Polyelektrolyten enthält und dessen hieraus gebildete Aktivierungsschicht ebenfalls beim Spülen in geringerem Umfang aufgelöst und/oder abgespült wird als eine Aktivierungsschicht mit nicht-modifizierten Substanzen.

Das Spülen kann dazu dienen, überschüssige Substanzen und/oder Verunreinigungen wie z.B. Salze und/oder trotz Trocknen noch nicht getrocknetes Aktivierungsmittel zu entfernen.
Als Spülflüssigkeit dient vorzugsweise Wasser oder eine verdünnte wässerige Lösung, besonders bevorzugt deionisiertes Wasser.
Da in Vertiefungen kompliziert geformter zu beschichtender Substrate wie z.B. Karosserien im Automobilbau ein flüssiges Mittel wie z.B. ein Aktivierungsmittel oder eine Zusammensetzung zur Ausbildung einer Folgeschicht nach der Beschichtung gegebenenfalls nicht vollständig abfließt, kann es ohne nachfolgenden Spülschritt z.B. mit einer Wasserspülung zu einer Anhäufung des Aktivierungsmittels und zu übermäßig dicken Beschichtungen in diesen Vertiefungen und zu Spritzern kommen, die zu Ungleichmäßigkeiten und Lackfehlern führen können. Deswegen ist es von Vorteil, wenn die mit einem Aktivierungsmittel und/oder die mit einer Folgeschicht beschichteten Substrate nach ihrer Beschichtung gespült werden. Hierbei wird insbesondere Wasser, deionisiertes Wasser oder eine wässerige Spüllösung verwendet. Die wässerige Spüllösung kann beispielsweise ein Salz, eine Säure, eine basische Verbindung und/oder ein Hilfsmittel wie z.B. einen Vernetzer enthalten. Hierdurch kann die Oberfläche der zu spülenden Schicht chemisch beeinflusst und/oder modifiziert werden.

Eine weitere Möglichkeit, die Spülfestigkeit der Aktivierungsschicht zu verbessern, besteht darin, die Spülbedingungen von der Art des Spülens, der Spülgeschwindigkeit, Spülmenge, Spülintensität, Spüldauer und/oder Strömung zu optimieren.

Beim Spülen einer spülfesten Aktivierungsschicht ist es erwünscht, dass nach dem Spülen mindestens 5 nm = 0,005 µm oder mindestens 0,02 µm der ursprünglichen oder gegebenenfalls theoretisch erzeugbaren Trockenfilmdicke - denn es wird oft nicht oder nicht ausreichend getrocknet, um einen Trockenfilm herzustellen - erhalten bleiben, gemessen unter dem Rasterelektronenmikroskop. Diese Restschichtdicke reicht üblicherweise für die Aktivierung aus. Vorzugsweise bleibt eine Restschichtdicke der nach dem Spülen verbliebenen Aktivierungsschicht von 0,02 bis 5 µm oder von 0,05 bis 2,5 µm oder von 0,1 bis 1,5 µm oder von 0,2 bis 1 µm. Häufig werden etwa 5 bis 95 %, vielfach 20 bis 80 % oder 40 bis 60 % der ursprünglichen Trockenfilmdicke beim Spülen der Aktivierungsschicht abgetragen.

In manchen Ausführungsformen bleiben 80 bis 100% der ursprünglichen Aktivierungsschicht beim Spülen und nach dem Spülen erhalten.

Bei dem erfindungsgemäßen Verfahren kann ein Spülen der Aktivierungsschicht und/oder ein Spülen der Folgeschicht vorzugsweise mit einer fließenden und/oder in einer strömenden wässerigen Spülflüssigkeit z.B. durch Abspülen, Spritzspülen und/oder Tauchspülen erfolgen. Das Spülen kann insbesondere als Tauchspülen vorzugsweise durch Tauchen in ein ruhendes oder bewegtes Bad, als Spritzspülen z.B. durch Spritzen auf die zu spülende Oberfläche und/oder durch Abspülen der zu spülenden Oberfläche erfolgen. Bei jedem Spülen kann bei Bedarf mehrfach gespült werden, z.B. mindestens einmal mit deionisiertem Wasser.
Die restlichen Gehalte der Aktivierungsschicht, die nach mindestens einem Spülen mit insbesondere deionisiertem Wasser erhalten sind, verdeutlichen, dass trotz intensiven Spülens ausreichend hohe Gehalte der erfindungsgemäßen Aktivierungsschicht erhalten bleiben. Diese Gehalte genügen, um die aktivierte Oberfläche für die nachfolgenden Behandlungsschritte wirksam vorzubereiten.
Erfindungsgemäß wurde gefunden, dass, wenn beim Spülen ein möglichst hoher Anteil der Aktivierungsschicht erhalten blieb, die Abscheidungsdicke und die Abscheidungsgeschwindigkeit in etwa proportional mit der Dicke der Aktivierungsschicht verbessert wurde.

Beim Kontakt zwischen der verbliebenen Aktivierungsschicht und der wässerigen Zusammensetzung zum Ausbilden der Folgeschicht tritt ein Aktivieren ein. Das Aktivieren über die Aktivierungsschicht schafft hierbei die Voraussetzung für ein Ausfällen, für ein Aussalzen und/oder für ein Niederschlagen von Partikeln.

In der vorliegenden Anmeldung wird eine Trockenfilmdicke der Folgeschicht von mehr als 1, von mehr als 2 µm, von mehr als 4 µm, von mehr als 6 µm, von mehr als 8 µm, von mehr als 10 µm oder sogar von mehr als 12 µm bevorzugt.

Besonders vorteilhaft für bestimmte industrielle Verfahrensabläufe und Anlagen ist es, wenn mindestens eine spülfeste Folgeschicht ausgebildet wird. Die mindestens eine Folgeschicht (= Fällungsschicht), die in vielen Ausführungsvarianten vorzugsweise auch spülfest ist, kann auch aus den Substanzen von mindestens einer Aktivierungsschicht und mindestens einer Folgeschicht gebildet werden. Die Folgeschicht kann auch aus mindestens zwei einzelnen Folgeschichten gebildet werden, die gegebenenfalls unterschiedliche chemische Zusammensetzungen aufweisen.

Grundsätzlich kann die wässerige Zusammensetzung zum Ausbilden der Folgeschicht beispielsweise durch Aufwalzen, Fluten, Aufrakeln, Spritzen, Sprühen, Streichen und/oder Tauchen, auch z.B. Tauchen bei erhöhter Temperatur der wässerigen Zusammensetzung, und gegebenenfalls durch nachfolgendes Abquetschen z.B. mit einer Rolle aufgetragen werden. Besonders bevorzugt ist auch für dieses Kontaktieren und Beschichten ein Auftrag durch ein Tauchverfahren.

Vorzugsweise enthält die wässerige Zusammensetzung zum Ausbilden der Folgeschicht (= Fällungsschicht) zu mindestens 90 Gew.-% der Fest- und Wirkstoffe fällbare, niederschlagbare und/oder aussalzbare Bestandteile, die anionisch, zwitterionisch, sterisch und/oder kationisch stabilisiert sind, bei der sich anionisch und kationisch stabilisierte Bestandteile nicht beeinträchtigen, besonders bevorzugt zu mindestens 92, 94, 96, 98, 99 oder 100 Gew.-%. Vorzugsweise enthält die wässerige Zusammensetzung zum Ausbilden der Folgeschicht (= Fällungsschicht) mindestens eine Substanz, die aufgrund des Aktivierens mit den aktivierenden Substanzen der verbliebenen Aktivierungsschicht ausgefällt, ausgesalzt und/oder niedergeschlagen werden kann.

Besonders bevorzugt enthält die wässerige Zusammensetzung zum Ausbilden der Folgeschicht mindestens eine Dispersion und/oder mindestens eine Formulierung wie z.B. eine Lackformulierung. Besonders bevorzugt ist es, dass hierbei in Schritt VI. die wässerigen Zusammensetzungen Formulierungen und/oder Dispersionen zum Ausbilden einer organischen Folgeschicht sind, die aus der Gruppe bestehend aus folgenden wässerigen Zusammensetzungen ausgewählt werden:
A) anionisch stabilisierten Polymerpartikeldispersionen,
B) anionisch stabilisierten Formulierungen,
C) sterisch stabilisierten Polymerpartikeldispersionen,
D) sterisch stabilisierten Formulierungen,
E) zwitterionisch stabilisierten Polymerpartikeldispersionen,
F) zwitterionisch stabilisierten Formulierungen und deren Mischungen
oder aus:
G) kationisch stabilisierten Polymerpartikeldispersionen,
H) kationisch stabilisierten Formulierungen,
I) sterisch stabilisierten Polymerpartikeldispersionen,
J) sterisch stabilisierten Formulierungen,
K) zwitterionisch stabilisierten Polymerpartikeldispersionen,
L) zwitterionisch stabilisierten Formulierungen und deren Mischungen.

Ganz besonders bevorzugt sind hierbei A), B) und deren Mischungen sowie G) und H) und deren Mischungen.

Besonders bevorzugt enthält die wässerige Zusammensetzung zum Ausbilden einer organischen Folgeschicht vorzugsweise organische Polymere und/oder Copolymere auf Basis von Polyvinylalkoholen, Polyvinylacetaten Polybutylacrylaten und/oder anderen Polyacrylaten, Polyepoxidestern, Polyacrylamiden, Polyacrylsäuren, Polycarbonaten, Polyestern, Polyethern, Polystyrolbutadienen, Poly(meth)acrylsäureestern, Polyinylacetatcopolymeren mit Acrylsäureestern und/oder Copolymeren mit Dibutylmaleinat und/oder mit Vinylestern von mindestens einer Koch-Säure, Polyethylenen, Polyvinylchloriden, Polyacrylnitrilen, Polyepoxiden, Polyurethanen, Polyacrylaten, Polymethacrylaten, Polyestern, Polyamiden, Polytetrafluorethylenen, Polyisobutadienen, Polyisoprenen, Silikonen, Silikonkautschuken und/oder deren Derivaten. Diese sind insbesondere zu mindestens 40 Gew.-% der Fest- und Wirkstoffe in der wässerigen Zusammensetzung enthalten.

Besonders bevorzugt enthält die wässerige Zusammensetzung zum Ausbilden der Folgeschicht (= Fällungsschicht) eine Dispersion, die mindestens eine Art stabilisierter Polymerpartikel ausgewählt aus den oben genannten organischen Polymeren und/oder Copolymeren und gegebenenfalls auch mindestens ein korrosionsinhibierendes anorganisches Pigment.

Damit ein Ausfällen, Aussalzen und/oder Niederschlagen eintreten kann, ist häufig eine Mindestschichtdicke an Aktivierungsschicht auf der Substratoberfläche von mindestens 5 nm Trockenfilmdicke erforderlich.

Häufig enthält die wässerige Zusammensetzung zum Ausbilden der Folgeschicht nach dem Kontakt mit der Aktivierungsschicht einen kleinen Gehalt an aktivierenden Substanzen, die oft ebenfalls in die Folgeschicht eingebaut werden. Dann enthalten die gefällten Substanzen gegebenenfalls auch die ausfällenden Substanzen.

Vorzugsweise enthält die wässerige Zusammensetzung zum Ausbilden einer Folgeschicht einen Gehalt an Fest- und Wirkstoffen im Bereich von 1 bis 60 Gew.-%, von 2 bis 50 Gew.-%, von 3 bis 40 Gew.-%, von 5 bis 30 Gew.-%, von 6 bis 24 Gew.-%, von 7 bis 20 Gew.-% oder von 8 bis 16 Gew.% der gesamten wässerigen Zusammensetzung. Ihr Gehalt an Fest- und Wirkstoffen liegt vorzugsweise im Bereich von 10 bis 600 g/L, von 18 bis 480 g/L, von 24 bis 360 g/L, von 28 bis 320 g/L, von 32 bis 280 g/L, von 36 bis 240 g/L, von 40 bis 200 g/L, von 44 bis 160 g/L, von 48 bis 120 g/L oder von 52 bis 80 g/L. In anderen Ausführungsformen liegt ihr Gehalt an Fest- und Wirkstoffen vorzugsweise im Bereich von 10 bis 400 g/L, von 14 bis 350 g/L, von 18 bis 310 g/L, von 22 bis 290 g/L, von 26 bis 260 g/L, von 30 bis 230 g/L, von 34 bis 205 g/L, von 38 bis 180 g/L, von 42 bis 155 g/L, von 46 bis 130 g/L, von 50 bis 105 g/L oder von 54 bis 70 g/L.

Die wässerige Zusammensetzung zum Ausbilden der Folgeschicht und ebenso die daraus gebildete Folgeschicht enthalten häufig vorwiegend Polymere, Copolymere und/oder deren Gemische. Vorzugsweise enthalten sie in manchen Ausführungsformen, insbesondere bei Formulierungen, 90 bis 100 Gew.-% der Fest- und Wirkstoffe.

Die Folgeschicht enthält die gefällten, ausgesalzten und/oder niedergeschlagenen Substanzen gegebenenfalls mit einem Anteil der aktivierenden Substanzen vorzugsweise in einem Gehalt im Bereich von 90 bis 100 Gew.-% oder von 95 bis 99 Gew.-%.

Zu den Substanzen einer wässerigen Zusammensetzung zum Ausbilden einer Folgeschicht, die gefällt, koaguliert, ausgesalzt und/oder niedergeschlagen werden können, können viele Substanzen gehören.

Hierbei werden beispielsweise insbesondere die stabilisierten Anteile der fällbaren Substanzen der wässerigen Zusammensetzung aus dieser wässerigen Zusammensetzung ausgefällt, ausgesalzt und/oder niedergeschlagen, insbesondere, wenn die Stabilisierung aufgehoben wird (destabilisiert wird). Hierbei ist es vorteilhaft, wenn die aktivierenden Substanzen der Aktivierungsschicht die auszufällenden Substanzen innerhalb von bis zu 15 Minuten oder sogar innerhalb von bis zu 5 Minuten ausfällen, aussalzen und/oder niederschlagen und hierbei Folgeschichten ausbilden, die möglichst mehr als 10 µm Trockenfilmdicke nach einem Trocknen aufweisen. Hierbei kann die Stabilisierung der Partikel ausgesalzt werden und gegebenenfalls in die Folgeschicht eingebaut werden. Es ist zu beachten, dass möglichst keine korrosiven oder korrosionsfördernden Bestandteile in die Folgeschicht eingebaut werden. Es ist vorteilhaft, eine möglichst homogene und geschlossene Beschichtung als Folgeschicht auszubilden.

Insbesondere stabilisierte polymere Substanzen werden hierbei ausgefällt. Dabei erfolgt oft eine Destabilisierung dieser Substanzen. Die gefällten Produkte sind häufig röntgenamorph.

Zu den Substanzen einer wässerigen Zusammensetzung zum Ausbilden einer Folgeschicht, die ausgesalzt werden können, können nichtpolymere ionische Substanzen gehören wie z.B. Salze. Die ausgesalzten Produkte sind häufig kristallin. Hierbei ist es vorteilhaft, wenn das gebildete Salz eine geringe Löslichkeit in Wasser aufweist. Besonders bewährt hat sich hierbei beispielsweise ein Calciumsulfat.

Zu den Substanzen einer wässerigen Zusammensetzung zum Ausbilden einer Folgeschicht, die niedergeschlagen werden können, können viele Substanzen gehören wie z.B. alle Arten anorganischer Nanopartikel, anorganischer Kolloide und anorganischer Pigmente, besonders bevorzugt stabilisierte Partikel. Hierbei werden beispielsweise insbesondere Oxide wie auf Basis von SiO₂ und Silicate, insbesondere Schichtsilicate, aus der wässerigen Zusammensetzung zum Ausbilden einer Folgeschicht niedergeschlagen. Die niedergeschlagenen Produkte können kristallin und/oder röntgenamorph sowie wasserunlöslich sein. Vorzugsweise enthält die wässerige Zusammensetzung zum Ausbilden der Folgeschicht einen Gehalt an fällbaren stabilisierten polymeren Substanzen der im Bereich von 60 bis 100 Gew.-% der Fest- und Wirkstoffe ,vorzugsweise im Bereich von 70 bis 99 oder von 80 bis 95 oder von 88 bis 92 Gew.-% der Fest- und Wirkstoffe. Vorzugsweise enthält die wässerige Zusammensetzung zum Ausbilden der Folgeschicht einen Gehalt an fällbaren stabilisierten polymeren Substanzen im Bereich von 1 bis 400 g/L oder besonders bevorzugt von 5 bis 300 g/L, von 10 bis 240 g/L, von 20 bis 210 g/L, von 30 bis 180 g/L, von 40 bis 150 g/L, von 50 bis 120 g/L oder von 60 bis 90 g/L.

Vorzugsweise enthält die wässerige Zusammensetzung zum Ausbilden der Folgeschicht einen Gehalt an aussalzbaren Substanzen im Bereich von 1 bis 200 g/L oder besonders bevorzugt von 5 bis 160 g/L, von 10 bis 120 g/L, von 20 bis 90 g/L oder von 30 bis 60 g/L.

Vorzugsweise enthält die wässerige Zusammensetzung zum Ausbilden der Folgeschicht einen Gehalt an niederschlagbaren Substanzen im Bereich von 0,1 bis 50 Gew.-%, besonders bevorzugt im Bereich von 1 bis 40 oder von 3 bis 30 oder von 5 bis 25 oder von 8 bis 21 oder von 10 bis 18 Gew.-% der niedergeschlagenen Substanzen. Vorzugsweise enthält die wässerige Zusammensetzung zum Ausbilden der Folgeschicht einen Gehalt an niederschlagbaren Substanzen im Bereich von 1 bis 200 g/L oder besonders bevorzugt von 5 bis 160 g/L, von 10 bis 120 g/L, von 20 bis 90 g/L oder von 30 bis 60 g/L.

Vorzugsweise wird eine wässerige Zusammensetzung mit einer Kombination von verschiedenartigen aktivierenden Substanzen wie z.B. von mindestens einem Polyelektrolyten insbesondere als Matrixsubstanz(en), mit mindestens einem mehrwertigen Salz verwendet.

Auf die mindestens eine Aktivierungsschicht wird nachfolgend eine Folgeschicht aufgebracht. Die für die Herstellung einer Folgeschicht eingesetzten Zusammensetzungen bestehen aus oder enthalten vorzugsweise mindestens eine wässerige Dispersion, insbesondere mindestens eine stabile Dispersion, und/oder mindestens eine wässerige Formulierung, insbesondere mindestens eine stabile Formulierung, besonders bevorzugt eine Lackformulierung oder eine stabile Lackformulierung. Neben Wasser kann diese Zusammensetzung gegebenenfalls Bestandteile eines organischen Lösemittels wie z.B. mindestens einen Alkohol, mindestens einen Ether und/oder ein schlecht oder nicht wasserlösliches organisches Lösemittel wie ein Furan, mindestens eine Art an anorganischen und/oder organischen Partikeln, mindestens eine den pH-Wert beeinflussende Substanz wie z.B. Säure wie Carbon- und/oder Fettsäure wie z.B. Essigsäure und/oder Mineralsäure, Ammoniak, Amin, deren Derivate, deren Stabilisierungen und Additive einschließlich Lackadditiven wie z.B. einen anorganischen und/oder organischen Vernetzer, einen Photoinitiator, einen Haftvermittler wie auf Basis Silan/Siloxan, ein Dispergiermittel, ein Gleitmittel wie Wachs, ein Filmbildungshilfsmittel, ein Netzmittel wie auf Basis von Polysiloxanen, ein Schutzkolloid, einen Emulgator, einen anorganischen und/oder organischen Korrosionsinhibitor, einen Entschäumer, ein Konservierungsmittel und/oder ein Biozid enthalten.

Bei dem erfindungsgemäßen Verfahren können als Polymere und/oder Copolymere in der wässerigen Zusammensetzung zum Ausbilden der Folgeschicht und/oder in der hieraus gebildeten Folgeschicht organische Polymere und/oder Copolymere insbesondere auf Basis von Alkydharz, Aminoplasten, Epoxid, Ethylenacrylat, Alkyl(meth)acrylat, Polyethylen, Polyisobutylen, Polyacrylonitril, Polyvinylchlorid, Poly(meth)acrylat, Polyalkyl(meth)acrylat wie z.B. Polymethylmethacrylat, Polyvinylacetat, Polyvinylalkohol, Polyvinylidenchlorid, Polytetrafluorethylen, Polyisopren, Polypropylen, Poly(meth)acrylat, Polyester, Polyether, Polyurethan, Phenolharz, Polycarbonat, Polyamid, Polystyrol, Polysulfid, Siloxan mit bis zu etwa 30 Monomereneinheiten pro Molekül (= Kondensationsgrad), Polysiloxan, Polyvinylacetal, Polyacetal, Styrolacrylat, deren Derivaten, deren Compoundierungen und/oder deren Gemischen verwendet werden. Die organischen Substanzen liegen häufig partikulär vor, insbesondere in Dispersionen. Eine Formulierung kann bei Bedarf mindestens eine Dispersion enthalten. Im Falle von Dispersionen und von manchen Formulierungen ist es bevorzugt, wenn diese eine Säurezahl im Bereich von 5 bis 200 aufweisen, insbesondere im Bereich von 8 bis 60 oder von 10 bis 35. Wässerige Zusammensetzungen, die insbesondere als Lösungen von organischen Polymeren eingesetzt werden und gegebenenfalls eingetrocknet und/oder chemisch modifiziert werden, können auch Säurezahlen im Bereich von 5 bis 1000 aufweisen.

Vorzugsweise enthält die wässerige Zusammensetzung zum Ausbilden einer Folgeschicht einen Gehalt an organischen Polymeren und/oder Copolymeren im Bereich von 40 bis 100 Gew.-%, von 46 bis 98 Gew.-%, von 52 bis 95 Gew.-%, von 58 bis 92 Gew.-%, von 64 bis 88 Gew.-%, von 68 bis 82 Gew.-% oder von 72 bis 76 Gew.-% der Fest- und Wirkstoffe der wässerigen Zusammensetzung. Ihr Gehalt an organischen Polymeren und/oder Copolymeren liegt vorzugsweise im Bereich von 10 bis 600 g/L, von 18 bis 480 g/L, von 24 bis 360 g/L, von 28 bis 320 g/L, von 32 bis 280 g/L, von 36 bis 240 g/L, von 40 bis 200 g/L, von 44 bis 160 g/L, von 48 bis 120 g/L oder von 52 bis 80 g/L. In anderen Ausführungsformen liegt ihr Gehalt an organischen Polymeren und/oder Copolymeren vorzugsweise im Bereich von 10 bis 400 g/L, von 14 bis 350 g/L, von 18 bis 310 g/L, von 22 bis 290 g/L, von 26 bis 260 g/L, von 30 bis 230 g/L, von 34 bis 205 g/L, von 38 bis 180 g/L, von 42 bis 155 g/L, von 46 bis 130 g/L, von 50 bis 105 g/L oder von 54 bis 70 g/L.

Besonders bevorzugt enthält die wässerige Zusammensetzung zum Ausbilden der Folgeschicht (= Fällungsschicht) mindestens ein organisches stabilisiertes Bindemittel, mindestens ein korrosionsinhibierendes Pigment und gegebenenfalls mindestens ein Additiv wie insbesondere ein Verdickungsmittel sowie gegebenenfalls auch einen geringen Gehalt an organischem Lösemittel. In manchen Ausführungsformen wird die wässerige Zusammensetzung zum Ausbilden der Folgeschicht zwei oder drei organische stabilisierte Bindemittel, mindestens ein farbgebendes Pigment, mindestens ein korrosioninhibierendes Pigment enthalten. In einzelnen Ausführungsformen hat es sich bewährt, organische Polymerdispersionen und/oder Formulierungen mit einem Gehalt insbesondere an Graphit und/oder Ruß einzusetzen, um die typische graue Farbe eines kathodischen Tauchlacks nachzustellen.

Die organischen Polymere und/oder Copolymere der wässerigen Zusammensetzung zum Ausbilden einer Folgeschicht liegen meistens als stabilisierte Dispersionen oder als stabilisierte Formulierungen vor. Sie liegen üblicherweise partikulär vor. Die Stabilisierung kann sterisch und/oder elektrostatisch erfolgen und wird meistens über mindestens einen Emulgator bewirkt. Da die Stabilisierung beim Einsatz von kommerziellen Dispersionen oder kommerziellen Formulierungen üblicherweise unbekannt ist und weder der Grad der Stabilisierung, noch die Anteile an sterischer und elektrostatischer Stabilisierung bekannt sind und kaum gemessen werden können, kann der Erfolg beim Ausbilden einer Folgebeschichtung insbesondere durch Ausfällen und Koagulieren nicht vorhergesagt werden, so dass die Güte der Fällung, Koagulation, Aussalzung und/oder Niederschlagung der Folgeschicht nicht vorhergesagt und nicht abgeleitet werden kann, sondern nur experimentell bestimmt werden kann.

Eine Stabilisierung von Partikeln in einer wässerigen Phase wie z.B. eine kolloidale Verteilung der in einer kontinuierlichen Phase dispergierten Teilchen erfolgt stabil, solange die Teilchen durch abstoßende Kräfte auseinander gehalten werden. Als grundlegende Stabilisierungsmechanismen wirken hierbei eine elektrostatische Stabilisierung und/oder eine sterische Stabilisierung. Zur elektrostatischen Stabilisierung müssen an der Oberfläche der Partikel Ladungen vorhanden sein. Eine sterische Stabilisierung tritt auf, wenn Makromoleküle an der Teilchenoberfläche angeheftet sind und wenn die Hüllen der Teilchen sich nicht wesentlich ineinander schieben können. Damit bleiben die Teilchen so weit voneinander entfernt, dass z.B. eine Dispersion stabil ist. Als zwitterionisch bezeichnet man Moleküle, die sowohl negativ geladene, als auch positiv geladene funktionelle Gruppen besitzen. Zwitterionische Tenside, die zur Stabilisierung von Partikeln in wässrigen Lösungen eingesetzt werden können, weisen einen polaren und einen unpolaren Teil auf. Als neutrale Substanzen sind nichtionische Tenside und alle organischen Moleküle, die keine Gruppen mit ionischem Charakter tragen, bekannt.

Hierbei werden vorzugsweise jeweils Substanzen mit chemischer Affinität zwischen Aktivierungsmittel und den Substanzen zur Ausbildung der Folgeschicht ausgewählt und in dem erfindungsgemäßen Verfahren kombiniert. Die wässerige Zusammensetzung zum Ausbilden einer Folgeschicht und ebenso die daraus gebildete Folgeschicht enthält häufig vorwiegend Polymere, Copolymere und/oder deren Gemische. Vorzugsweise enthalten sie in manchen Ausführungsformen, insbesondere bei Formulierungen, 0,1 bis 45 Gew.-% der Fest- und Wirkstoffe an einem oder an mehreren anorganischen Stoffen, insbesondere 1 bis 30 oder 6 bis 15 Gew.-%.

Anorganische Stoffe, die je nach Verfahrensablauf, Eigenschaftsprofil der Folgeschicht und dem Anwendungszweck des beschichteten Substrats enthalten sein können, sind bevorzugt Farbpigmente, Weißpigmente wie z.B. auf Basis von TiO₂, amorphe Farbstoffe, Füllstoffe, anorganische Fasern und/oder in Wasser schwach lösliche Korrosionsschutzpigmente wie z.B. solche auf Basis von Kieselsäure(n), Oxid(en) und/oder Silicat(en) wie z.B. Erdalkalihaltigen Korrosionsschutzpigment(en) wie Calcium-modifizierter Kieselsäure und/oder Erdalkalisilicat.

Der Gehalt der wässerigen Zusammensetzung zum Ausbilden einer Folgeschicht kann 0 oder 0,01 bis 5 oder 0,1 bis 1 Gew.-% der flüssigen Zusammensetzung an organischen Lösemitteln enthalten, bezogen auf die flüssige Zusammensetzung.

Bei dem erfindungsgemäßen Verfahren können als Partikel die unterschiedlichsten Partikelarten, Partikelgrößen und Partikelformen verwendet werden.

Als Partikel in der wässerigen Zusammensetzung zum Ausbilden der Folgeschicht und/oder in der hieraus gebildeten Folgeschicht können vorzugsweise Oxide, Hydroxide, Carbonate, Phosphate, Phosphosilicate, Silicate, Sulfate, organische Polymere inklusive Copolymeren und deren Derivaten, Wachse und/oder compoundierte Partikel, insbesondere solche auf Basis von Korrosionsschutzpigmenten, organischen Polymeren, Wachsen und/oder compoundierten Partikeln, verwendet werden und/oder deren Gemische. Sie weisen vorzugsweise Partikelgrößen auf im Bereich von 5 nm bis 15 µm, von 8 nm bis 5 µm, von 12 nm bis 3 µm oder von 15 nm bis 1,5 µm, insbesondere von 20 nm bis 1 µm, von 30 nm bis 700 nm, von 40 nm bis 600 nm oder von 50 nm bis 500 nm. Sie sind vorzugsweise wasserunlösliche Partikel.

Zu den wasserunlöslichen Partikeln gehören unter anderem auch stabilisierte Partikel, bei denen die Stabilisierung in der wässerigen Phase erfolgt und/oder vorliegt und vorzugsweise auf der Partikeloberfläche beispielsweise mit einem nichtionischen und/oder ionischen Emulgator, mit Ionen, mit einem Verlaufsmittel und/oder mit einem Verdickungsmittel erreicht werden kann. Compoundierte Partikel weisen in einem Partikel ein Gemisch von mindestens zwei verschiedenen Substanzen auf. Compoundierte Partikel können oft andere Substanzen mit sehr unterschiedlichen Eigenschaften aufweisen. Sie können beispielsweise teilweise oder gänzlich die Zusammensetzung für einen Lack enthalten, gegebenenfalls sogar mit einem Gehalt an nichtpartikulär ausgebildeten Substanzen wie z.B. Tensid, Entschäumer, Dispergiermittel, Lackhilfsmittel, weitere Arten Additive, Farbstoff, Korrosionsinhibitor, schwach wasserlöslichem Korrosionsschutzpigment und/oder andere Substanzen, die für entsprechende Mischungen üblich und/oder bekannt sind. Solche Lackbestandteile können beispielsweise für organische Beschichtungen zum Umformen, für Korrosionsschutzprimer und andere Primer, für Farblacke, Füller und/oder Klarlacke geeignet und/oder häufig genutzt sein.

Generell ist es hierbei vielfach bevorzugt, dass a) ein Gemisch chemisch und/oder physikalisch verschiedenartiger Partikel, b) Partikel, Aggregate und/oder Agglomerate aus chemisch und/oder physikalisch verschiedenartigen Partikeln und/oder c) compoundierten Partikeln in der wässerigen Zusammensetzung zum Ausbilden der Folgeschicht und/oder in der hieraus gebildeten Folgeschicht verwendet werden.

Ein Korrosionsschutzprimer weist häufig elektrisch leitfähige Partikel auf und ist bei einem hohen Anteil derartiger Partikel auch bei Schichtdicken im Bereich von z.B. 3 bis 10 µm elektrisch schweißbar.

Vielfach ist es bevorzugt, dass eine Partikel enthaltende wässerige Zusammensetzung und/oder die hieraus gebildete Folgeschicht neben mindestens einer Art von Partikeln auch mindestens eine nichtpartikuläre Substanz enthält/enthalten, insbesondere Additive, Farbstoffe, Korrosionsinhibitoren und/oder schwach wasserlösliche Korrosionsschutzpigmente. Es können als Partikel in einer wässerigen Zusammensetzung zum Ausbilden der Folgeschicht und/oder in der hieraus gebildeten Folgeschicht beispielsweise auch farbige und/oder elektrisch leitfähige Partikel insbesondere auf Basis von Oxidpartikeln mit elektrisch leitenden Beschichtungen, Eisenphosphid, Eisenoxid, Fullerenen und anderen Kohlenstoffverbindungen mit Graphit-ähnlichen Strukturen und/oder Ruß, gegebenenfalls auch Nanocontainer und/oder Nanoröhren, enthalten sein. Andererseits können hierbei insbesondere als Partikel in der Zusammensetzung und/oder in der hieraus gebildeten Beschichtung beschichtete Partikel, chemisch und/oder physikalisch modifizierte Partikel, Kern-Schale-Partikel, compoundierte Partikel aus verschiedenartigen Substanzen, verkapselte Partikel, Nanocontainer und/oder Nanotraps verwendet werden.

Bei dem erfindungsgemäßen Verfahren ist es in einer Ausführungsform bevorzugt, dass die Partikel enthaltende wässerige Zusammensetzung zum Ausbilden einer Folgeschicht, die hieraus gebildete Folgeschicht und/oder die hieraus z.B. durch Verfilmen und/oder Vernetzen gebildete Beschichtung neben mindestens einer Art von Partikeln auch jeweils mindestens einen Farbstoff, ein Farbpigment, ein Korrosionsschutzpigment, einen Korrosionsinhibitor, ein Leitfähigkeitspigment, eine weitere Art an Partikeln, ein Silan/Silanol/Siloxan, ein Polysiloxan, ein Silazan/Polysilazan, ein Lackadditiv und/oder ein Additiv wie z.B. jeweils mindestens ein Tensid, einen Entschäumer und/oder ein Dispergiermittel, enthält/enthalten.

Bei dem erfindungsgemäßen Verfahren ist es bevorzugt, dass die Zusammensetzung und/oder die hieraus gebildete Beschichtung neben mindestens einer Art von Partikeln und gegebenenfalls neben mindestens einer nicht-partikulären Substanz teilweise oder vollständig eine chemische Zusammensetzung für einen Primer, einen Lack wie beispielsweise für einen Füller, Decklack und/oder Klarlack aufweist.

Bei dem erfindungsgemäßen Verfahren können als Partikel in der wässerigen Zusammensetzung zum Ausbilden einer Folgeschicht, insbesondere dann, wenn hieraus zuerst eine Partikel-reiche Folgeschicht ausgebildet werden soll, insbesondere Partikel auf Basis von Alkydharz, Aminoplasten, Epoxid, Ethylenacrylat, Alkyl(meth)acrylat, Polyethylen, Polyisobutylen, Polyacrylonitril, Polyvinylchlorid, Poly(meth)acrylat, Polyalkyl(meth)acrylat wie z.B. Polymethylmethacrylat, Polyvinylacetat, Polyvinylalkohol, Polyvinylidenchlorid, Polytetrafluorethylen, Polyisopren, Polypropylen, Poly(meth)acrylat, Polyester, Polyether, Polyurethan, Phenolharz, Polykarbonat, Polyamid, Polystyrol, Polysulfid, Siloxan mit bis zu etwa 30 Monomereneinheiten pro Molekül (= Kondensationsgrad), Polysiloxan, Polyvinylacetal, Polyacetal, Styrolacrylat, deren Derivaten, deren Compoundierungen und/oder deren Gemischen verwendet werden. Auch bei Partikel-reichen Folgeschichten kann ein Verfilmen der Beschichtung besonders vorteilhaft sein. Denn alle diese Substanzen können partikulär vorliegen.

Als Zusätze zu den organischen Polymeren und Copolymeren in Form von Partikeln empfehlen sich in vielen Ausführungsformen Pigmente und/oder Additive, wie sie in Lacken und/oder Primern häufig verwendet werden. Vorzugsweise weist die wässerige Zusammensetzung zum Ausbilden der Folgeschicht eine dynamische Viskosität im Bereich von 1 bis 10.000 mPa s auf, besonders bevorzugt weist sie eine Viskosität im Bereich von 4 bis 5000 oder von 8 bis 1200 mPa s, ganz besonders bevorzugt im Bereich von 15 bis 800, von 20 bis 450, von 40 bis 350 oder von 60 bis 250 mPa s auf; jeweils gemessen mit einem Rotationsviskosimeter Modular Compact Rheometer Physica MCR 300 der Fa. Paar Physica gemäß DIN EN ISO 3219.

Der pH-Wert der wässerigen Zusammensetzung zum Ausbilden einer Folgeschicht kann in weiten Grenzen schwanken bzw. an die geeigneten pH-Werte angepasst werden. Er liegt bevorzugt im Bereich von 4 bis 12, besonders bevorzugt im Bereich von 6 bis 11, von 7 bis 10 oder von 7,5 bis 9.

Eine Möglichkeit zur Verbesserung der Abscheidung einer Folgeschicht und/oder zur Verbesserung der Folgeschicht ist das chemische Modifizieren der Substanzen der Folgeschicht z.B. mit Silan/Silanol/Siloxan und/oder anderen Haftgruppen.

Eine andere Möglichkeit zur Verbesserung der Abscheidung einer Folgeschicht und/oder zur Verbesserung der Folgeschicht ist die Verwendung einer niedrigen elektrischen Hilfsspannung beim Ausfällen, Aussalzen und/oder Niederschlagen zum Aufbringen einer Folgeschicht. Besonders bevorzugt wird dabei eine Hilfsspannung von weniger als 2,5 V, von weniger als 1 V oder von weniger als 0,5 V insbesondere als Gleichspannung angelegt, wobei vorzugsweise nahezu kein Strom fließt. Im Falle eines Stromflusses beträgt die Stromstärke weniger als 0,1 A/dm² oder vorzugsweise weniger als 0,01 A/dm². Hierbei kann die Hilfsspannung z.B. eine Ionenwanderung beschleunigen, aber nicht ein Ausfällen, ein Niederschlagen und/oder ein Aussalzen auslösen. Diese Hilfsspannung kann das Ausbilden der Schicht beschleunigen und/oder die Schichtqualität verbessern. In den meisten Ausführungsformen wird jedoch keine elektrische Spannung von außen angelegt. Wenn ein Tauchlack aufgebracht werden soll, kann stromlos oder gegebenenfalls mit einer elektrischen Hilfsanspannung gearbeitet werden, aber die elektrische Hilfsspannung wird anders als bei einem Elektrotauchlack nicht primär zum Ausfällen, Niederschlagen und/oder Aussalzen einer wässerigen Zusammensetzung genutzt. Die elektrische Hilfsspannung bewirkt offenbar eine Partikelmigration und somit eine Konzentrationserhöhung z.B. der auszufällenden Substanzen und/oder der zu koagulierenden Partikel, aber sie bewirkt keine Trennung von Wasser und hierin enthaltenen Feststoffen aufgrund des elektrischen Feldes und Stromes wie beim Aufbringen eines Elektrotauchlacks.
Das Beschichten mit einer Folgeschicht kann vorzugsweise bei Temperaturen der Zusammensetzung zwischen 5 und 95°C erfolgen, besonders bevorzugt bei Raumtemperatur. oder bei Temperaturen zwischen 15 und 50°C. Hierbei kann das Substrat in mehreren Ausführungsformen eine Temperatur im Bereich von 10 bis 120°C und insbesondere im Bereich von 25 bis 95°C oder von 40 bis 70°C aufweisen.
Die Beschichtung mit der wässerigen Zusammensetzung zum Ausbilden der Folgeschicht kann durch jede Art der Applikation erfolgen, insbesondere beispielsweise durch Spritzen, Tauchen, Aufwalzen usw..
In einigen Ausführungsformen der vorliegenden Erfindung ist dieses Beschichtungsverfahren ein selbstregulierendes Verfahren, so dass nur für eine gewisse Zeit und z.B. entsprechend dem Koagulationspotenzial der Aktivierungsschicht eine Beschichtung ausgebildet wird - unabhängig davon, wie lange der Kontakt mit der Lösung für die Folgeschicht andauert.

Ein Spülen insbesondere der nur leicht angetrockneten, der noch nicht getrockneten und/oder der frisch aufgebrachten Folgeschicht ist vorteilhaft, um den Gehalt an Verunreinigungen und übermäßigen Anteilen an nicht-gefällten, nicht-ausgesalzten und/oder nicht-niedergeschlagenen Substanzen zu verringern (naß-in-naß-Verfahren). Es kann helfen, restliche Gehalte an korrosiv wirkenden Substanzen zu entfernen.
Es hilft auch, ein erfindungsgemäßes Verfahren analog zu einem bestehenden Tauchverfahren anzupassen.
Bei einer Ausführungsform des erfindungsgemäßen Verfahrens ist es bevorzugt, dass die Folgeschicht mindestens einmal mit einer Spülflüssigkeit wie z.B. Wasser und/oder einer wässerigen Nachspülflüssigkeit gespült wird und danach vorzugsweise im nassen, feuchten, angetrockneten oder nicht stärker getrockneten Zustand mit mindestens einer organischen Zusammensetzung z.B. einem Primer und/oder Lack beschichtet wird.

Die Folgeschicht kann in vielfältiger Weise getrocknet werden. Das Trocknen kann in jeder konventionellen Weise und in allen bekannten Trocknern erfolgen, aber auch mit Infrarotstrahlung, mit NIR-Strahlung, mit Umluft, mit Frischluftzufuhr usw.. Besonders bevorzugt ist ein Trockenvorgang mit hohem Gas- und/oder Luftdurchsatz, um den hohen Gehalt an Wasserdampf abzuführen. Die Trocknung muss in geeigneter Weise angepasst werden an die stoffliche Zusammensetzung und Dicke der zu trocknenden Folgeschicht sowie an die Art der Beschichtungsanlage und ihre Geschwindigkeit, damit möglichst keine Risse, Anrisse, Abplatzungen, Kocher und keine anderen Fehlstellen auftreten.

Vorzugsweise wird die Folgeschicht verfilmt und/oder vernetzt, um eine möglichst geschlossene und bei metallischem Untergrund auch korrosionsbeständige Beschichtung auszubilden. Das Trocknen kann insbesondere in einem Temperaturbereich von 10 bis 170°C erfolgen, vorzugsweise in einem Bereich von 15 bis 140 oder von 20 bis 120 oder von 25 bis 90 oder von 30 bis 80°C, besonders bevorzugt oberhalb von 50 oder 70°C bis 130 oder bis 95°C. Ein Verfilmen und/oder Vernetzen kann insbesondere beim Trocknen und/oder Erwärmen erfolgen. Die Vernetzung kann auch teilweise oder gänzlich durch radikalische Polymerisation und/oder zusätzlich durch eine z.B. thermische Nachvernetzung erfolgen. Die Vernetzungsprozesse sind grundsätzlich bekannt. Bei erhöhter Temperatur wird üblicherweise ein Verfilmen auftreten. Ein Filmbildungshilfsmittel kann dabei auch helfen, dass beim Trocknen nicht gleich eine verfestigende Oberflächenschicht auf der Folgeschicht ausgebildet, die dem weiteren Austritt von Wasserdampf hinderlich ist.

Inwieweit eine Verfilmung und/oder Vernetzung erfolgt, hängt von dem chemischen Aufbau der verwendeten Zusammensetzung und von dem chemischen Aufbau der daraus gebildeten Folgeschicht ab und ist dem Fachmann grundsätzlich geläufig, so dass hier eine weitere Beschreibung nicht erforderlich ist.

Unter Verfilmen wird eine Filmbildung aus einem Material mit hohem organischen Anteil wie einer Polymerdispersion verstanden, bei der vor allem Polymerteilchen vorzugsweise bei Raumtemperatur oder leicht erhöhter Temperatur in einen einheitlichen Film übergehen. Dabei wird oft von Verschmelzen der vergleichsweise großen Polymerteilchen gesprochen. Hierbei erfolgt die Verfilmung aus einem wässerigen Medium bei der Trocknung und gegebenenfalls unter Plastifizierung der Polymerteilchen durch die verbleibenden Filmbildungshilfsmittel. Die Filmbildung lässt sich durch den Einsatz weichen Kunstharzes (Pendelhärte nach König bei Raumtemperatur nach DIN EN ISO 1522 gemessen bei weniger als 30 s) und/oder durch Zusatz von Substanzen, die als temporäre Weichmacher wirken (= Filmbildungshilfsmittel), ermöglichen und/oder verbessern. Filmbildungshilfsmittel wirken als spezifische Lösemittel, die die Oberfläche der Polymerteilchen erweichen und so deren geometrische Veränderung durch Verschmelzung der organischen Partikel miteinander ermöglichen, aber insbesondere nicht kurzflüchtig sind und insbesondere vorwiegend nach dem Abdampfen des Wassers abdampfen und vorzugsweise nicht dauerhaft im Film verbleiben. Der entstehende Film ist hierbei oft porenfrei oder im Wesentlichen porenfrei und kann nicht aufgelöste und/oder nicht auflösbare Partikel wie z.B. anorganische Partikel einschließen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Bei einer geeigneten Filmbildung wird in vielen Ausführungsvarianten ein transparenter Film ausgebildet, jedoch kein milchig-weißer oder gar pulveriger Film, was ein Anzeichen für eine gestörte Filmbildung ist. Für die möglichst perfekte Filmbildung hat die Temperatur des auf einer Oberfläche applizierten Nassfilms über der Mindestfilmtemperatur (MFT) zu liegen. Denn nur dann sind die Polymerteilchen weich genug, um zu koaleszieren. Hierbei ist es besonders vorteilhaft, wenn die Filmbildungshilfsmittel als temporäre Weichmacher den pH-Wert der wässerigen Zusammensetzung nicht oder nahezu nicht verändern. Eine Filmbildung lässt sich durch den Einsatz thermoplastischer Polymere und/oder Copolymere und/oder durch Zusatz von Substanzen, die als temporäre Weichmacher dienen, verbessern. Diese zuletzt genannten Filmbildungshilfsmittel wirken als spezifische Lösemittel, die die Oberfläche der Polymerteilchen einer Dispersion oder Formulierung erweichen und so deren Verschmelzung ermöglichen. Hierbei ist vorteilhaft, wenn diese Weichmacher einerseits ausreichend lange in der wässerigen Zusammensetzung bleiben, um sich auf die Polymerteilchen lange auswirken zu können, und danach verdampfen und somit aus dem Film entweichen. Ferner ist es vorteilhaft, wenn auch ausreichend lange während des Trockenprozesses ein Restwassergehalt vorhanden ist.

Das mindestens eine Filmbildungshilfsmittel, das in Form von mindestens einem langkettigen Alkohol zugegeben wird und/oder zugegeben ist, dient zur Verbesserung der Filmbildung insbesondere während der Trocknung. Aus dem organischen Filmbildner wird zusammen mit mindestens einem langkettigen Alkohol insbesondere während und/oder nach der Abgabe von Wasser und anderen flüchtigen Bestandteilen ein weitgehend oder gänzlich homogener organischer Film durch Verfilmen ausgebildet. Zur besseren Filmbildung der polymeren Partikel der wässerigen Zusammensetzung während der Trocknung kann, insbesondere als temporärer Weichmacher der Polymerpartikel, mindestens ein langkettiger Alkohol, vorzugsweise ein Butandiol und deren Derivate, insbesondere auf Basis von Triethylenglykol, Tripropylenglykol und/oder deren Derivaten, dienen.

Der Gehalt an mindestens einem Filmbildungshilfsmittel kann in der wässerigen Zusammensetzung - insbesondere im Bad - vorzugsweise 0,01 bis 50 g/L bezogen auf Feststoffe einschließlich Wirkstoffen, besonders bevorzugt 0,08 bis 35 g/L, ganz besonders bevorzugt 0,2 bis 25 g/L, 0,3 bis 20 g/L oder 0,5 bis 16 g/L, insbesondere 1 bis 12 g/L, 2 bis 10 g/L, 3 bis 8 g/L oder 4 bis 6 g/L betragen. Das Gewichtsverhältnis der Gehalte an organischem Filmbildner zu Gehalten an Filmbildungshilfsmitteln in der wässerigen Zusammensetzung - insbesondere im Bad - kann in weiten Bereichen schwanken; insbesondere kann es bei ≤ (100 : 0,1) liegen. Vorzugsweise liegt dieses Verhältnis im Bereich von 100 : 10 bis 100 : 0,2, von 100 : 5 bis 100 : 0,4 oder von 100 : 2,5 bis 100 : 0,6, besonders bevorzugt im Bereich von 100 : 2 bis 100 : 0,75, von 100 : 1,6 bis 100 : 0,9 oder von 100 : 1,4 bis 100 : 1.

Oft wird ein Gemisch aus mindestens zwei Filmbildungshilfsmitteln eingesetzt. Vorzugsweise weisen die Filmbildungshilfsmittel einen Siedepunkt bei 760 mm Hg im Bereich von 140 bis 400°C auf, insbesondere im Bereich von 150 bis 340°C, von 160 bis 310°C oder von 170 bis 280°C, und/oder eine Verdunstungszahl bei Ether = 1 im Bereich von 100 bis 5000, insbesondere im Bereich von 120 bis 4000, von 135 bis 2800 oder von 150 bis 1600. Insbesondere vorteilhaft als Filmbildungshilfsmittel sind Alkohole wie z.B. Diole sowie deren Ether und Ester mit insbesondere 4 bis 20 oder mit 6 bis 18 oder mit 8 bis 16 C-Atomen, vorzugsweise Alkohole, Ethylenglykolether und Propylenglykolether mit insbesondere 4 bis 20 oder mit 6 bis 18 oder mit 8 bis 16 C-Atomen.

In einer bevorzugten erfindungsgemäßen Variante einsetzbare Filmbildungshilfsmittel werden ausgewählt aus der Gruppe bestehend aus Butandiol, Butylglykol, Butyldiglykol, Ethylenglykolether wie Ethylenglykolmonobutylether, Ethylenglykolmonoethylether, Ethylenglykolmonomethylether, Ethylglykolpropylether, Ethylenglykolhexylether, Diethylenglykolmethylether, Diethylenglykolethylether, Diethylenglykolbutylether, Diethylenglykolhexylether, Polypropylenglykolether wie Propylenglykolmonomethylether, Dipropylenglykolmonomethylether, Tripropylenglykolmonomethylether, Propylenglykolmonobutylether, Dipropylenglykolmonobutylether, Tripropylenglykolmonobutylether, Propylenglykolmonopropylether, Dipropylenglykolmonopropylether, Tripropylenglykolmonopropylether, Propylenglykolphenylether, Trimethylpentandioldiisobutyrat, Polytetrahydrofuran(e), Polyetherpolyol(e) Polyesterpolyol(e) sowie deren Derivaten und deren Gemischen. Sie sind vorzugsweise in einem Gehalt im Bereich von 0,1 bis 30 g/L bezogen auf Feststoffe einschließlich Wirkstoffen und besonders bevorzugt in einem Gehalt im Bereich von 1 bis 10 g/L oder von 2 bis 5 g/L in der wässerigen Zusammensetzung enthalten.

Im Unterschied zum Verfilmen, das bei vergleichsweise niedrigen Temperaturen wie z.B. bei Temperaturen im Bereich ab etwa 5°C erfolgen kann, werden für chemisch oder chemisch-thermisch vernetzende organische Beschichtungen üblicherweise Temperaturen von mindestens 50°C zur Vernetzung benötigt. Vorzugsweise werden Filmbildungshilfsmittel ausgewählt und in einer Menge zugesetzt, so dass die Zusammensetzung vorzugsweise bei Temperaturen größer als 5°C verfilmt, besonders bevorzugt größer als 10°C, größer als 20°C oder größer als 40°C, insbesondere größer als 60°C, größer als 80°C, größer als 100°C oder größer als 120°C. Entsprechend ist es bevorzugt, dass die Mindestfilmbildungstemperatur der Kunstharze einschließlich Filmbildungshilfsmittel bei Temperaturen größer als 40°C verfilmt werden, besonders bevorzugt größer als 60°C, größer als 80°C, größer als 100°C oder größer als 120°C. Die gleichzeitige und/oder anschließende Trocknung findet vorzugsweise bei leicht höheren (= bei mindestens 20°C) oder deutlich höheren, bevorzugt mindestens 30, 50, 70, 90 oder 110°C, Temperaturen als der Mindestfilmbildungstemperatur der Kunstharze einschließlich Filmbildungshilfsmittel statt. Bei der Trocknung entweichen Wasser und gegebenenfalls enthaltene organische Lösemittel. Dabei setzt üblicherweise die Filmbildung ein, bei der die organischen Substanzen, gegebenenfalls in partikulärer Form, sich dichter aneinander lagern können, durch die höhere Temperatur weicher werden und einen geschlossenen Film ausbilden können. Besonders bevorzugt ist, dass das Verfilmen zu einem wesentlichen Anteil bereits bei Raumtemperatur erfolgt.

Eine Vernetzung insbesondere von Harzen kann beispielsweise mit bestimmten reaktiven Gruppen wie z.B. Isocyanat-, Isocyanurat- und/oder Melamingruppen erfolgen. Als Vernetzer können unabhängig voneinander dienen: Anorganische Vernetzer wie z.B. auf Basis von Zirkonium-Verbindungen wie z.B. Ammonium-Zirkoniumcarbonat und/oder metallorganische Vernetzer wie z.B. auf Basis von Organotitanat wie z.B. Diisopropylditriethanolaminotitanat und/oder auf Basis von Organozirkonat und/oder organische Vernetzer wie z.B. Adipindihydrazid, auf Basis von Aziridin wie z.B. polyfunktionales Polyaziridin, auf Basis einer Azoverbindung, auf Basis von Diamin, auf Basis von Diimid wie z.B. multifunktionelle Polycarbodiimide, auf Basis von Formaldehyd wie z.B. Harnstoff-Formaldehyd und/oder Melamin-Formaldehyd, auf Basis von Imidazol wie z.B. 2-ethyl-4-methyl-Imidazol, auf Basis von Isocyanat, auf Basis von Isocyanurat, auf Basis von Melamin wie z.B. Methoxymethyl-Methylol-Melamin und/oder Hexamethoxymethyl-Melamin, auf Basis von Peroxid, auf Basis von Triazin wie z.B. Tris-(Alkoxycarbonylamino)-Triazin und/oder auf Basis von Triazol. Sie sind vorzugsweise in einem Gehalt im Bereich von 0,1 bis 30 g/L bezogen auf Feststoffe einschließlich Wirkstoffen und besonders bevorzugt in einem Gehalt im Bereich von 1 bis 10 g/L oder von 2 bis 5 g/L in der wässerigen Zusammensetzung enthalten.

Hierbei werden organische Vemetzer auf Basis von Melamin-Formaldehyd üblicherweise im Temperaturbereich von etwa 130 bis etwa 210°C eingesetzt, vorzugsweise im Bereich von 140 bis etwa 200°C, während die übrigen organischen Vernetzer meistens oder üblicherweise in einem Temperaturbereich etwa von 50 bis etwa 120°C eingesetzt werden, vorzugsweise im Bereich von etwa 60 bis etwa 110 oder bis etwa 100°C. Diese letzten Vernetzer werden hier als organische Niedrigtemperaturvernetzer angesprochen.

Vorzugsweise wird die Folgeschicht in einer Weise getrocknet, dass insbesondere vorhandene organische Polymerpartikel insbesondere als Bestandteile einer Dispersion verfilmen können, so dass eine weitgehend oder vollständig homogene Beschichtung gebildet wird. Die Trockentemperaturen können dabei in manchen Ausführungsformen so hoch gewählt werden, dass die organischen polymeren Bestandteile vernetzen können.

Bei dem erfindungsgemäßen Verfahren ist es in einigen Ausführungsformen bevorzugt, dass eine einen hohen Anteil an organischen Partikeln enthaltende Folgeschicht ausgebildet wird; es ist bevorzugt, dass diese beispielsweise beim Trocknen verfilmt und/oder vernetzt wird. Das Verfilmen erfolgt in manchen Ausführungsformen auch ohne Anwesenheit von Filmbildungshilfsmitteln. Hierbei können die Partikel der Beschichtung, insbesondere wenn sie vorwiegend oder gänzlich als organische Polymere vorliegen, vorzugsweise zu einem weitgehend oder gänzlich geschlossenen Beschichtung verfilmt werden, insbesondere beim Trocknen. Hierbei ist es oft bevorzugt, dass die Trocknungstemperatur einer Beschichtung, die vorwiegend oder gänzlich aus organischen Polymeren bestehen, so gewählt wird, dass eine weitgehend oder gänzlich geschlossene Beschichtung gebildet wird. Bei Bedarf kann zum Verfilmen mindestens ein Filmbildungshilfsmittel zugesetzt werden, insbesondere auf Basis von mindestens einem langkettigen Alkohol. Bei Ausführungsformen mit mehreren Folgeschichten übereinander werden vorzugsweise erst alle Folgeschichten nacheinander aufgebracht und bei Bedarf danach gemeinsam verfilmt und/oder vernetzt.

Im Rahmen der vorliegenden Erfindung ist es vielfach bevorzugt, dass das Trocknen, Verfilmen und/oder Vernetzen im Temperaturbereich von 5 bis 350°C, von 8 bis 200°C, von 10 bis 150°C, von 12 bis 120°C oder von 14 bis 95°C erfolgt, besonders bevorzugt im Temperaturbereich von 16 bis 40°C bezogen auf die Ofentemperatur und/oder bezogen auf Peak-Metal-Temperature (PMT). Der gewählte Temperaturbereich ist weitgehend von der Art und Menge der organischen und gegebenenfalls auch der anorganischen Bestandteile und gegebenenfalls auch von ihren Filmbildungstemperaturen und/oder Vernetzungstemperaturen abhängig.

Die Folgeschicht weist vorzugsweise eine Nassfilmdicke im Bereich von 5 bis 120 µm oder von 10 bis 80 oder von 15 bis 50 µm auf und weist dabei nach einem Trocknen vorzugsweise eine Trockenfilmdicke im Bereich von 4 bis 100 µm, von 6 bis 80 µm, von 8 bis 60 µm, von 10 bis 45 µm, von 12 bis 32 µm, von 14 bis 28 µm, von 16 bis 25 oder von 18 bis 20 µm auf.

Daher hängt die Qualität der Folgeschicht in vielen Ausführungsformen einerseits wesentlich von der Qualität und von der Dicke der Aktivierungsschicht oder der nach einem Spülen verbliebenen Aktivierungsschicht ab und andererseits wesentlich von den physikochemischen Bedingungen wie z.B. von der Konsistenz und von der Zusammensetzung der wässerigen Zusammensetzung zum Ausbilden der Folgeschicht.

Es kann vorteilhaft sein, wenn die mindestens eine aktivierende Substanz der Aktivierungsschicht keine zu hohe Diffusionsgeschwindigkeit in die wässerige Zusammensetzung beim Ausbilden der Folgeschicht hat. Die Diffusionsgeschwindigkeit der mindestens einen aktivierenden Substanz der Aktivierungsschicht kann begrenzt werden, indem einerseits größere und/oder sperrige Moleküle z.B. der Polyelektrolyte und/oder chemisch modifizierte Polyelektrolyte eingesetzt werden oder andererseits Salze ausgewählt werden mit einer geringeren Löslichkeit in Wasser. Auch die Temperaturen des mit Aktivierungsschicht versehenen Substrats und/oder der wässerigen Zusammensetzung zum Ausbilden der Folgeschicht können zur Beeinflussung der Ausbildung der Folgeschicht verwendet werden.

Überraschenderweise deuten die vorliegenden Versuchsergebnisse an, dass es ein Optimum zur Ausbildung von möglichst dicken Folgeschichten bei dicken Aktivierungsschichten und bei vergleichsweise gering konzentrierten wässerigen Zusammensetzungen zum Ausbilden einer Folgeschicht gibt, oberhalb und unterhalb dieser optimalen Konzentration der wässerigen Zusammensetzung es zur Ausbildung von nicht ganz so dicken Folgeschichten kommt.

Bei der weiteren Behandlung der beschichteten Substrate kann bei Bedarf unabhängig davon, ob davor Öl aufgebracht worden ist oder nicht, insbesondere ein alkalisches Reinigen, ein saures Beizen und/oder ein Wasserspülen erfolgen.
Eine Beschichtung mit einem Korrosionsschutzprimer wie z.B. einem Schweißprimer kann zusätzlichen Korrosionsschutz insbesondere in Hohlräumen und schlecht zugänglichen Partien eines Substrats, sowie eine Umformbarkeit und/oder eine Fügbarkeit z.B. beim Falzen, Kleben und/oder Schweißen ermöglichen. Nach einem Umformen und/oder Fügen kann bei Bedarf ein weiteres Beschichten, gegebenenfalls auch in einem erfindungsgemäßen Verfahrensablauf, verwendet werden.
In der industriellen Praxis könnte ein Korrosionsschutzprimer insbesondere dann eingesetzt werden, wenn das damit beschichtete Substrat wie z.B. ein Blech nach der Beschichtung mit dem Korrosionsschutzprimer geformt und/oder mit einer weiteren Komponente gefügt wird und wenn weitere Beschichtungen erst danach aufgebracht werden. Wenn in diesem Verfahrensgang zusätzlich ein Korrosionsschutzprimer unter der Aktivierungsschicht und unter der Partikelbeschichtung aufgebracht wird, wird üblicherweise ein deutlich verbesserter Korrosionsschutz erzeugt.
Bei einem Spülen der mit Aktivierungsmittel und den Substanzen der Folgeschicht beschichteten Substrate soll die die Folgeschicht oft möglichst wenig entfernt werden und darf nicht vollständig entfernt werden. Daher ist es vorteilhaft, wenn die Aktivierungsschicht und/oder die Folgeschicht für derartige Anlagen und Verfahrensabfolgen ausreichend spülfest ist.
Besonders bevorzugt ist es, die Folgeschicht im nassen, im feuchten oder in einem nur leicht angetrockneten Zustand mit einer nachfolgenden Beschichtung in einem naß-in-naß-Verfahren zu beschichten.

Nach dem Aufbringen der Aktivierungsschicht und der Folgeschicht und gegebenenfalls nach dem Erzeugen einer weitgehend oder gänzlich geschlossenen Beschichtung aus der Aktivierungs- und/oder Folgeschicht kann auf diese Schicht bzw. Beschichtung z.B. die Schicht eines Klebstoffes, Primers und/oder Lackes aufgebracht werden. Besonders bevorzugt ist es in einigen Ausführungsformen, auf die weitgehend oder gänzlich geschlossene Beschichtung mindestens eine Schicht eines Lackes oder sogar einen Lackaufbau z.B. aus Basislack und Klarlack oder eines beliebigen Lacksystems aufzubringen. Wenn danach eine weitere organische Beschichtung aufgebracht wird, kann damit eine Farbgebung und/oder eine Mattierung erzielt oder eine Möglichkeit zum Fügen erreicht werden. In anderen Ausführungsformen kann es bevorzugt sein, die derart beschichteten Oberflächen zu formen und/oder mit mindestens einer anderen Komponente zu fügen und/oder vor einem Klebevorgang eine Klebeschicht und/oder mindestens ein klebendes Formteil aufzubringen.

Die Behandlungsschritte und die möglichen Zusammensetzungen vor dem Aktivierungsschritt und nach der Ausbildung einer Folgeschicht sind dem Fachmann grundsätzlich bekannt und können vielfältig variiert werden.

Die Aufgabe der vorliegenden Erfindung wird auch gelöst mit einer Beschichtung, die nach dem erfindungsgemäßen Verfahren hergestellt wurde. Die erfindungsgemäße Beschichtung kann vorzugsweise eingesetzt werden für beschichteten Substrate als Draht, Drahtgeflecht, Band, Blech, Profil, Verkleidung, Teil eines Fahrzeugs oder Flugkörpers, Element für ein Haushaltsgerät, Element im Bauwesen, Gestell, Leitplanken-, Heizkörper- oder Zaunelement, Formteil komplizierter Geometrie oder Kleinteil wie z.B. Schraube, Mutter, Flansch oder Feder.

Bevorzugt wird die erfindungsgemäße Beschichtung bzw. das erfindungsgemäß beschichtete Substrat eingesetzt im Fahrzeug- oder Flugzeugbau, im Bauwesen, im Gerätebau oder im Heizungsbau und insbesondere für Komponenten für Fahrzeuge wie Fahrzeugkarosserien, für Flugkörper, für Architekturanwendungen, für Heizungen und für Haushaltsgeräte.

In einer Ausführungsform des Verfahrens werden angewandt:
Ggf. ein einstufiges oder mehrstufiges Reinigen des Substrates, auf das mindestens ein Spülen mit Wasser oder mit einer wässerigen Spülflüssigkeit folgt - Aufbringen einer Aktivierungsschicht - mindestens ein Spülen mit Wasser oder mit einer wässerigen Spülflüssigkeit - Aufbringen einer Folgeschicht aus Substanzen der wässerigen Zusammensetzung zum Ausbilden einer Folgeschicht und ggf. auch aus verbliebenem Aktivierungsmittel - mindestens ein Spülen mit Wasser oder mit einer wässerigen Spülflüssigkeit - Trocknen und hierbei ggf. auch Verfilmen - ggf. Folgeschicht bei erhöhter Temperatur vernetzen - ggf. weitere Beschichtungen aufbringen - ggf. Einbrennen und Vernetzen - ggf. weitere Beschichtungen aufbringen.

In einer besonderen Ausführungsform des Verfahrens werden angewandt: Alkalisches Reinigen des Substrates - Spülen mit Stadtwasser - Spülen mit VE-Wasser - Aufbringen einer Aktivierungsschicht - Spülen mit VE-Wasser - Aufbringen einer Folgeschicht aus Substanzen der wässerigen Zusammensetzung zum Ausbilden einer Folgeschicht und ggf. auch aus verbliebenem Aktivierungsmittel - Spülen mit VE-Wasser - Trocknen und hierbei ggf. auch Vefilmen - ggf. Einbrennen und Vernetzen - ggf. Beschichten mit weiterer organischen Beschichtung.

Es hat sich gezeigt, dass auf den erfindungsgemäß mit aktivierender Substanz beschichteten Oberflächen anschließend weitgehend oder gänzlich geschlossene Folgeschichten, die zusammen mit der verbliebenen Aktivierungsschicht eine Schichtdicke sogar im Bereich von 2 bis 50 µm aufweisen können, gebildet werden, insbesondere eine Schichtdicke im Bereich von 3 bis 40 µm, von 4 bis 30 µm, von 5 bis 20 µm, von 6 bis 15 µm oder von 8 bis 10 µm, besonders bevorzugt eine Schichtdicke im Bereich von 3 bis 30 µm, von 4 bis 25 µm, von 5 bis 18 µm, von 6 bis 12 µm oder von 7 bis 10 µm. Entsprechende Schichtdicken können die einzelnen Beschichtungen vor und/oder nach ihrer Verfilmung und/oder vor ihrer Vernetzung aufweisen.
Im Vergleich zu den in WO 2010/054985 A1 beschriebenen Beschichtungsverfahren zeigen die erfindungsgemäßen Ergebnisse, dass die vorliegenden Verfahren technisch weit weniger aufwändig und wesentlich wirksamer sind, um Trockenfilmdicken im Bereich von mindestens 2 µm zu erzielen, da das Fällungspotenzial bei den Zusammensetzungen der WO 2010/054985 A1 wesentlich geringer ist als bei den hier beschriebenen Verfahren und da eine viel dickere Silan-Aktivierungsschicht für eine gewisse Schichtdicke erforderlich ist als bei den hier genutzten Beschichtungen mit einem Gehalt an Aktivierungsmittel. Denn mit den Verfahren der WO 2010/054985 A1 ließen sich auch bei weiteren Versuchen nur Gesamtschichtdicken aus der Aktivierungsschicht und aus der der Folgeschicht zusammen unter normalerweise technisch anwendbaren Bedingungen nur von bis zu 1 oder 2 µm erzielen (siehe Vergleichsbeispiele).

Im Vergleich hierzu konnten mit dem vorliegenden erfindungsgemäßen Verfahren mit einer einzigen Folgeschicht Trockenfilmdicken von bis zu 65 µm erzielt werden, bevorzugte Schichtdicken der Folgeschichten im Bereich von 3 bis 30 µm konnten ohne Probleme hergestellt werden.

Es hat sich gezeigt, dass die erfindungsgemäß beschichteten Oberflächen, aus denen anschließend weitgehend oder gänzlich geschlossene Beschichtungen hergestellt wurden, auf deutlich einfachere und deutlich kostengünstigere Weise hergestellt werden konnten als beispielsweise Elektrotauchlack-, autophoretische Tauchlack- oder Pulverlackbeschichtungen.

Ferner hat es sich gezeigt, dass erfindungsgemäß hergestellte Beschichtungen den Elektrotauchlack-, autophoretischen Tauchlack- und Pulverlackbeschichtungen bei entsprechender Zusammensetzung der heutigen industriellen Praxis in ihren Eigenschaften zumindest gleichwertig sind.

Es wurde überraschend festgestellt, dass das erfindungsgemäße Verfahren, in einfacher Weise und ohne aufwändige Steuerung betrieben werden kann; es muss üblicherweise keine äußere elektrische Spannung angelegt werden. Überraschenderweise wurde gefunden, dass auch anionische Polyelektrolyte zur Fällung einer anionisch stabilisierten Dispersion führen können.

Das erfindungsgemäße Verfahren kann in einem weiten Temperaturbereich und vor allem auch bei Raumtemperatur eingesetzt werden, wenn von der nachfolgenden Trocknung abgesehen wird.

Es wurde überraschend festgestellt, dass bei dem erfindungsgemäßen Verfahren bezüglich der Aufbringung des Aktivierungsmittels keine aufwändigen Steuerungsmaßnahmen erforderlich sind, um eine gleichmäßige und homogene Beschichtung zu erzielen, und dass bei geringem Chemikalienverbrauch hochwertige schützende Folgeschichten gebildet werden, die in bevorzugten Ausführungsformen eine Dicke im Bereich von 500 nm bis 30 µm erreichen.

Es wurde überraschend festgestellt, dass die Aktivierungsschichten, mit Hilfe von entsprechenden oberflächenaktiven Modifikationen an der polymeren Struktur und deren Einarbeitung in Vorbehandlungsformulierungen noch spülfester im Tauchen und ohne vorherige Zwischentrocknung der Aktivierungsschicht auf gereinigten Substratoberflächen verankert werden konnten.

Es konnten außerdem aufgrund der erfindungsgemäßen Aktivierungsschichten entsprechende spülfeste Folgeschichten abgeschieden werden. Die Aktivierungsschichten ermöglichten in einer Variante ein Nass-in-nass-Tauchverfahren für die gesamte Applikation bestehend aus Aktivierungsschicht, Folgeschicht und notwendigen Spülschritten, so dass das erfindungsgemäße Verfahren als Ersatz für ein Beschichtungsverfahren mit einem Elektrotauchlack eingesetzt werden kann.

Es wurde überraschend festgestellt, dass es sich bei dem erfindungsgemäßen Verfahren bezüglich der Abscheidung, insbesondere der Folgeschicht, um ein selbstregulierendes Verfahren handelt, bei dem keine aufwändigen Steuermaßnahmen erforderlich sind und bei dem bei geringem Chemikalienverbrauch hochwertige schützende Beschichtungen gebildet werden.

Es wurde überraschend festgestellt, dass die eingesetzten wässerigen Zusammensetzungen, insbesondere auch die verwendeten Formulierungen, für das Abscheiden einer Folgeschicht auf einer mit einer Aktivierungsschicht vorkonditionierten Oberfläche nicht nur in weitgehend geschlossene oder vollständig geschlossene und in weitgehend homogene oder vollständig homogene Beschichtungen überführt werden konnten - im Gegensatz zu denselben wässerigen Zusammensetzungen, die ohne entsprechende Aktivierungsschicht auf der Oberfläche aufgebracht wurden, sondern dass die Folgeschichten auch spülfest auf der Oberfläche verankert werden konnten.

Es wurde überraschend festgestellt, dass je nach Auswahl des Substrates, der unterschiedlichen Aktivierungsmittel und der wässerigen Zusammensetzung für das Ausbilden einer Folgeschicht erfindungsgemäße Beschichtungen hergestellt werden können, die in ihrer Lackhaftung und in ihrem Korrosionsschutz individuell an die jeweiligen Anforderungen angepasst werden können, z.B. an bestimmte, für die Anwendung sinnvolle Niveaus von Korrosionsschutz und Lackhaftung.

Es wurde überraschend festgestellt, dass durch die applizierte Schichtdicke an Aktivierungsmittel die resultierende Schichtdicke der Folgeschicht gezielt beeinflusst werden konnte: Dies bedeutet, dass eine geringe nach dem Spülen verbliebene Beschichtung mit Aktivierungsmittel zu einer geringeren Schichtdicke bei der Folgeschicht führt und umgekehrt eine höhere Schichtdicke an Aktivierungsschicht eine entsprechend große Schichtstärke an Folgeschicht zur Folge hat.

Außerdem wurde in diesem Zusammenhang festgestellt, dass die aufgebrachte Menge an Folgeschicht auch bei Ausdehnung der Verweildauer der entsprechend aktivierten Substrate in dem die Folgeschicht enthaltenden Bad nicht weiter ansteigt (Selbstregulation), dies bedeutet, dass nach einer Verweilzeit der aktivierten Proben in dem die Folgeschicht ausbildenden Bad, insbesondere im Bereich von 1 bis 10 Minuten, keine weitere Erhöhung der Schichtstärke der Folgeschicht aufgrund einer längeren Verweildauer der aktivierten Substrate in dem vorab erwähnten Bad auftrat.

Zusammenfassend war es möglich, mit Hilfe der Schichtstärke der Aktivierungsschicht und des eingesetzten Gehalts von Fest- und Wirkstoffen der Folgeschicht die resultierende vollständige Schichtstärke gezielt zu steuern. Es wurde überraschend festgestellt, dass die erfindungsgemäß abgeschiedenen Folgeschichten üblicherweise homogene Schichten mit gleichmäßigen Trockenfilmdicken auf einem komplex geformten Werkstück ausbildeten, vergleichbar mit der Qualität von herkömmlichen, elektrophoretisch oder autophoretisch abgeschiedenen Lackschichten.

Es wurde weiterhin überraschend festgestellt, dass die Bäder, welche die wässerigen Zusammensetzung für die Folgeschicht aufwiesen, trotz eines hohen Durchsatzes an aktivierten Oberflächen eine ausgezeichnete Prozessstabilität aufwiesen und keine weiteren Fällungsreaktionen außer auf den aktivierten Oberflächen festgestellt wurden. Hierbei wurden nach dem Trocknen Schichten von hoher Güte erzielt, die mit elektrophoretischen Beschichtungen vergleichbar sind.
Daher gab es keine unerwünschten Fällungen im Bad und an den Wandungen der Anlagen, Behälter und Rührwerke trotz des hohen Durchsatzes an mit Aktivierungsmittel versehenen Oberflächen.
Ein weiterer besonders überraschender Effekt der vorliegenden Erfindung wurde gefunden für den Fall, dass ein mit einem Silan/Silanol/Siloxan modifizierter Polyelektrolyt als Aktivierungsmittel zur Herstellung der Aktivierungsschicht verwendet wird, insbesondere bei mit mindestens einem Alkoxysilan mit Epoxy- und/oder Isocyanatogruppen und/oder mit mindestens einem hieraus entstandenen Silanol und/oder Siloxan modifizierten Polyelektrolyten.
Bei einem besonderen Bereich von Mengenverhältnissen Silan(en) zu Aktivierungsmittel werden besonders gute Abscheidungen erreicht; außerhalb dieses Bereiches wurde nur die klassische Art der Abscheidung von Silan gefunden, jedoch keinerlei Abscheidung des Aktivierungsmittels mehr.
Überraschenderweise können auch anionische Polyelektrolyte zur Fällung einer anionisch stabilisierten Dispersion führen.
Demgemäß ist auch die Verwendung eines mit mindestens einem Silan/Silanol/Siloxan, insbesondere eines mit mindestens einem Alkoxysilan mit Epoxy- und/oder Isocyanatogruppen und/oder mit mindestens einem hieraus entstandenen Silanol und/oder Siloxan modifizierten Polyelektrolyten als Aktivierungsmittel bestehend aus Polyethylenimin und Silan/Silanol/Siloxan im Verhältnis von 1 : (1000 bis 5000), berechnet auf Basis des Silans in Verfahren zur stromlosen Beschichtung von Substraten, insbesondere von metallischen Substraten, Gegenstand der vorliegenden Erfindung.

Einige Ausführungsformen der vorliegenden Erfindung ergeben sich aus den folgenden Varianten A) bis F), die in beliebiger Form miteinander kombiniert werden können:
A) Verfahren zum Beschichten von Oberflächen von Substraten, die gegebenenfalls vorbeschichtet sein können (= zu beschichtende Oberflächen), mit einer ersten wässerigen Zusammensetzung in Form einer Lösung, Emulsion und/oder Suspension, die mindestens einen Polyelektrolyten (Aktivierungsmittel) enthält, wobei eine erste Polyelektrolyt enthaltende Schicht (Aktivierungsschicht) ausgebildet wird, wobei die erste Schicht, die Polyelektrolyt enthält, danach gespült und/oder getrocknet wird, wobei die erste Schicht in eine zweite wässerige Zusammensetzung in Form einer Lösung, Emulsion und/oder Suspension insbesondere in einem Tauchverfahren kontaktiert wird, wobei die Ionen, Komplexe und/oder Verbindungen der ersten Schicht in die zweite wässerige Zusammensetzung gegebenenfalls eindiffundieren können und/oder in Wechselwirkung und/oder in Reaktion, vorzugsweise Fällungs- und/oder Aussalzungsreaktion, treten können und/oder wobei die erste Schicht gegebenenfalls zumindest teilweise aufgelöst wird, wobei nicht unbedingt Substanz der ersten Schicht in die neue Beschichtung aufgenommen werden muss, aber in vielen Ausfällen aufgenommen wird, wobei die zweite wässerige Zusammensetzung gegebenenfalls mindestens eine fällbare Substanz, mindestens eine Art niederschlagbarer Partikel und/oder mindestens eine niederschlagbare Verbindung enthält, die mit den Ionen, Komplexen und/oder Verbindungen der ersten Schicht gegebenenfalls eine Fällungsreaktion und/oder Aussalzungsreaktion eingehen,
   wobei eine zweite Schicht (Fällungsschicht, Folgeschicht) gegebenenfalls aus gefällten und/oder niedergeschlagenen Substanzen auf der ersten Schicht und/oder an der Stelle der ersten Schicht ausgebildet wird, die danach gespült, getrocknet und/oder weiter beschichtet wird, wobei insgesamt zumindest einmal getrocknet und/oder bei einer Temperatur insbesondere im Bereich von 10 bis 170°C und/oder chemisch behandelt wird, um die Substanzen auf dem Substrat aufzubringen und/oder zu fixieren, wobei der dabei ausgebildete Trockenfilm aus der ersten und zweiten Schicht eine Dicke von mindestens 1 µm oder 2 µm aufweist.
B) Verfahren nach der vorstehenden Variante, wobei die Aktivierungsschicht mittels Tauchlackieren erzeugt wird.
C) Verwendung eines Verfahrens zum stromlosen Beschichten nach einer der Varianten A) oder B) für die Beschichtung von Bändern, Blechen, Profilen, Teilen und/oder für die Herstellung von Fahrzeugkomponenten, von Architekturkomponenten, Fahrzeugkarosserien und Haushaltsgeräten.
D) Verwendung einer Zusammensetzung nach Variante C) für die Beschichtung von Bändern, Blechen, Profilen, Teilen und/oder für die Herstellung von Fahrzeugkomponenten, von Architekturkomponenten, Fahrzeugkarosserien und Haushaltsgeräten.
Als Substrate kommen demgemäß im Rahmen der vorliegenden Erfindung insbesondere Bänder, Bleche, Profile, Teile bevorzugt für die Herstellung von Fahrzeugkomponenten, von Architekturkomponenten, Fahrzeugkarosserien und Komponenten für Haushaltsgeräte zum Einsatz.

Andere Varianten der vorliegenden Erfindung sind die folgenden:
V1. Verfahren zum stromlosen Beschichten von Substraten umfassend die Schritte oder bestehend aus den Schritten:
   I. Bereitstellen eines Substrats,
   II. gegebenenfalls Reinigung des Substrats,
   III. Auftrag einer Aktivierungsschicht,
   IV. gegebenenfalls Zwischentrocknung der Aktivierungsschicht,
   V. Spülen der Aktivierungsschicht:
   VI. Beschichtung der aktivierten Oberflächen mit Formulierungen und/oder Dispersionen für die Ausbildung einer organischen Folgebeschichtung,
   VII. Spülen der Folgebeschichtung,
   VIII. Trocknen und/oder Vernetzen der Beschichtung,
   dadurch gekennzeichnet, dass die Aktivierungsschicht aus einem oder mehreren anionischen Polyelektrolyten ausgewählt aus der Gruppe bestehend aus Polyacrylsäure, mit Silan modifizierter Polyacrylsäure, mit Silanverbindung(en) modifizierter Polyacrylsäure, Polyacrylsäure-Maleinsäure-Copolymer, mit Silan modifiziertem Polyacrylsäure-Maleinsäure-Copolymer, mit Silanverbindung(en) modifiziertem Polyacrylsäure-Maleinsäure-Copolymer, Polyacrylsäure-Acrylamid-Copolymer, mit Silan modifiziertem Polyacrylsäure-Acrylamid-Copolymer, mit Silanverbindung(en) modifiziertem Polyacrylsäure-Acrylamid-Copolymer, Polystyrolsulfonsäure, Polyvinylsulfonsäure, Polyphosphorsäure und Gemischen davon gebildet wird.
V2. Verfahren nach V1, dadurch gekennzeichnet, dass in Schritt III. die Aktivierungsschicht aus einem Stoff oder Stoffgemisch besteht ausgewählt aus der Gruppe bestehend aus Polyacrylsäure, mit Silan modifizierter Polyacrylsäure, mit Silanverbindung(en) modifizierter Polyacrylsäure, Polyacrylsäure-Maleinsäure-Copolymer, mit Silan modifiziertem Polyacrylsäure-Maleinsäure-Copolymer, mit Silanverbindung(en) modifiziertem Polyacrylsäure-Maleinsäure-Copolymer, Polyacrylsäure-Acrylamid-Copolymer, mit Silan modifiziertem Polyacrylsäure-Acrylamid-Copolymer, mit Silanverbindung(en) modifiziertem Polyacrylsäure-Acrylamid-Copolymer und Gemischen davon,
   bevorzugt aus der Gruppe bestehend aus mit Silan modifizierter Polyacrylsäure, mit Silanverbindung(en) modifizierter Polyacrylsäure, mit Silan modifiziertem Polyacrylsäure-Maleinsäure-Copolymer, mit Silanverbindung(en) modifiziertem Polyacrylsäure-Maleinsäure-Copolymer, mit Silan modifiziertem Polyacrylsäure-Acrylamid-Copolymer, mit Silanverbindung(en) modifiziertem Polyacrylsäure-Acrylamid-Copolymer und Gemischen davon.
V3. Verfahren nach V1 oder V2, dadurch gekennzeichnet, dass in Schritt I. ein metallisches Substrat ausgewählt aus der Gruppe bestehend aus Aluminium, Eisen, Kupfer, Titan, Zink, Zinn und/oder Legierungen bzw. Gemischen davon eingesetzt wird, bevorzugt bestehend aus Stahl, Kupfer, Aluminium, Legierungen damit oder davon, besonders bevorzugt bestehend aus Stahl oder Aluminium.
V4. Verfahren nach einer der Varianten V1 bis V3, dadurch gekennzeichnet, dass in Schritt VI. die Formulierungen und/oder Dispersionen für die Ausbildung einer organischen Folgebeschichtung aus der Gruppe bestehend aus
   A) kationisch stabilisierten wässerigen Polymerpartikeldispersionen,
   B) kationisch stabilisierten wässrigen Formulierungen
   und deren Mischungen ausgewählt werden.
V5. Verfahren nach einer der Varianten V1 bis V4, dadurch gekennzeichnet, dass als modifizierende Silanverbindungen Polysiloxane eingesetzt werden.
V6. Verwendung von Polyacrylsäure, mit Silan modifizierter Polyacrylsäure, mit Silanverbindung(en) modifizierter Polyacrylsäure, Polyacrylsäure-Maleinsäure-Copolymer, mit Silan modifiziertem Polyacrylsäure-Maleinsäure-Copolymer, mit Silanverbindung(en) modifiziertem Polyacrylsäure-Maleinsäure-Copolymer, Polyacrylsäure-Acrylamid-Copolymer, mit Silan modifiziertem Polyacrylsäure-Acrylamid-Copolymer, mit Silanverbindung(en) modifiziertem Polyacrylsäure-Acrylamid-Copolymer, Polystyrolsulfonsäure, Polyvinylsulfonsäure, Polyphosphorsäure und Gemischen davon,
   bevorzugt Polyacrylsäure, mit Silan modifizierter Polyacrylsäure, mit Silanverbindung(en) modifizierter Polyacrylsäure, Polyacrylsäure-Maleinsäure-Copolymer, mit Silan modifiziertem Polyacrylsäure-Maleinsäure-Copolymer, mit Silanverbindung(en) modifiziertem Polyacrylsäure-Maleinsäure-Copolymer, Polyacrylsäure-Acrylamid-Copolymer, mit Silan modifiziertem Polyacrylsäure-Acrylamid-Copolymer, mit Silanverbindung(en) modifiziertem Polyacrylsäure-Acrylamid-Copolymer und Gemischen davon
   als Aktivierungsmittel in Verfahren zur stromlosen Beschichtung von Substraten, insbesondere metallischen Substraten.
V7. Verfahren zum stromlosen Beschichten von Substraten umfassend die Schritte oder bestehend aus den Schritten:
   I. Bereitstellen eines Substrats,
   II. gegebenenfalls Reinigung des Substrats,
   III. Auftrag einer Aktivierungsschicht,
   IV. gegebenenfalls Zwischentrocknung derAktivierungsschicht,
   V. Spülen der Aktivierungsschicht:
   VI. Beschichtung der aktivierten Oberflächen mit Formulierungen und/oder Dispersionen für die Ausbildung einer organischen Folgebeschichtung,
   VII. Spülen der Folgebeschichtung,
   VIII. Trocknen und/oder Vernetzen der Beschichtung,
   dadurch gekennzeichnet, dass
   die Polyelektrolyten der Folgebeschichtung entweder vollständig oder zu einem Anteil von mindestens 80 Gew.-%, bevorzugt mindestens 90 Gew.-%, das gleiche Ladungsvorzeichen aufweisen, wie die in Schritt III. eingesetzten Aktivierungsmittel.
V8 Verfahren nach Variante V7, dadurch gekennzeichnet, dass Polyacrylsäure und/oder Polyphosphorsäure als anionisches Aktivierungsmittel eingesetzt wird.
Die verschiedenen Ausführungsformen der vorliegenden Erfindung, z.B. aber nicht ausschließlich diejenigen der verschiedenen abhängigen Ansprüche, können dabei in beliebiger Art und Weise miteinander kombiniert werden.

### Beispiele und Vergleichsbeispiele:

### Beispiele B48 bis B58 zur Verwendung von gleichartig geladenen Aktivierungsschichten und Substanzen für eine Folgeschicht:

Diese Grundsatzversuche dienen dem Nachweis, dass ein anionisches Aktivierungsmittel auch eine anionisch stabilisierte Dispersion ausfällen kann. Es wurde der grundsätzlich gleichartige Herstellungsgang unter den gleichen Bedingungen wie bei den modifizierten Polyelektrolyten verwendet.

Überraschenderweise konnte bei diesen Versuchen gezeigt werden, dass eine Aktivierungsschicht, deren aktivierende Substanzen gleichartig geladen sind wie die Substanzen der wässerigen Zusammensetzung zum Ausbilden der Folgeschicht, zum Ausfällen, zum Aussalzen und/oder zum Niederschlagen sowie zum Ausbilden einer Folgeschicht praktisch identisch ist wie bei einer Aktivierungsschicht, die gegensätzlich geladen ist zu den Substanzen der wässerigen Zusammensetzung zum Ausbilden der Folgeschicht und zu Fällungen und zum Ausbilden einer Folgeschicht. Hierbei wurde jedoch auf die Ausbildung eines Trockenfilms bei der Folgeschicht verzichtet, so dass keine Trockenfilmdicken gemessen werden konnten.

Dennoch konnte grundsätzlich mit diesen ersten Versuchen gezeigt werden, dass eine Aktivierungsschicht auch für gleichartig geladene Substanzen der wässerigen Zusammensetzung zum Ausbilden der Folgeschicht erfolgreich dienen kann. Die Ausfällungsversuche deuten an, dass ausreichende Trockenfilmdicken der Folgeschicht erzeugt werden können, wobei vorzugsweise jeweils Substanzen mit chemischer Affinität ausgewählt und in dem erfindungsgemäßen Verfahren kombiniert werden.

**Tabelle 2 für anionisch-anionische Behandlung mit den Beispielen B53 bis B58: Anionisches Aktivierungsmittel mit anionisch stabilisierter Dispersion**

| **Beispiel** | **B53** | **B54** | **B55** | **B56** | **B57** | **B58** |
|---|---|---|---|---|---|---|
| | | | | | | |
| **Anionisches Aktivierungsmittel** | | | | | | |
| Typ Nr. | 21 | 22 | 25 | 26 | 28 | 30 |
| **Anionisch stabilisierte Dispersion** | | | | | | |
| Typ Nr. (Konz. %) | 1 (20) | 1 (20) | 1 (20) | 1 (20) | 1 (20) | 1 (20) |
| **Fällungsintensität** | | | | | | |
| Stark | X | | | | | X |
| Schwach | | | X | X | | |
| Fast keine Fällung | | X | | | X | |

| | | | | | | |
|---|---|---|---|---|---|---|
| Stark: Aktivierungsmittel fällt 61-100 % der Dispersion. Schwach: Aktivierungsmittel fällt 11-60 % der Dispersion. Fast keine Fällung: Aktivierungsmittel fällt 0-10 Prozent der Dispersion. Die Werte wurden jeweils gravimetrisch bestimmt. | | | | | | |

### Beispiele B61 bis B120 zu anionischen Polyelektrolyten als Aktivierungsmitteln:

### I. Substrat-Typ (Bleche):

1: Elektrolytisch verzinktes Stahlblech mit einer Zink-Schichtauflage von 5 µm, Blechdicke 0,81 mm.
2: Feuerverzinktes Stahlblech, Blechdicke ca. 0,8 mm.
3: Kaltgewalzter Stahl, Blechdicke ca. 0,8 mm.
4: Aluminiumlegierung der GüteklasseAC 170, Blechdicke ca. 1,0 mm.

### II. Alkalisches Reinigen:

1: 30 g/L alkalischer Silicat-freier Reiniger Gardoclean^{®} S 5176 sowie 4 g/L Gardobond^{®} Additiv H 7406 zum Unterdrücken der Schaumbildung beim Spritzen der Chemetall GmbH wurden in Stadtwasser für einen pH-Wert von 10,5 angesetzt, so dass nur ein moderater Beizangriff auftrat. Die Bleche wurden 180 s im Spritzen bei 60°C gereinigt und anschließend 120 s mit Stadtwasser und danach 120 s mit deionisiertem Wasser im Tauchen gespült.

### III. Aktivieren:

Das Aktivieren dient dem Aufbringen einer homogenen Folgeschicht, wobei das wässerige Aktivierungsmittel die für das Ausfällen, Koagulieren, Aussalzen und/oder Niederschlagen benötigten Substanzen enthält und/oder neben Wasser aus den folgenden Substanzen besteht. Es wurde mit folgenden Aktivierungsmitteln beschichtet, indem die gereinigten Substrate in ein leicht bewegtes Bad über 2,5 Minuten bei Raumtemperatur getaucht wurden:
21: Anionische Polyacrylsäure. Mittleres Molekulargewicht 4.000 g/Mol. Gehalt an Fest- und Wirkstoffen 2 Gew.-%.
22: Anionische Polyacrylsäure. Mittleres Molekulargewicht 250.000 g/Mol. Gehalt an Fest- und Wirkstoffen 2 Gew.-%.
23: Anionische Polyacrylsäure. Mittleres Molekulargewicht in der Größenordnung von 5000 g/Mol. Gehalt an Fest- und Wirkstoffen 2 Gew.-%.
24: Anionisches Polyacrylsäure-Maleinsäure-Copolymer. Mittleres Molekulargewicht 3.000 g/Mol. Gehalt an Fest- und Wirkstoffen 2 Gew.-%.
25: Anionisches Polyacrylsäure-Maleinsäure-Copolymer Mittleres Molekulargewicht 70.000 g/Mol. Gehalt an Fest- und Wirkstoffen 2 Gew.-%.
26: Anionisches Polyacrylsäure-acrylamid-Copolymer der Firma Sigma-Aldrich. Mittleres Molekulargewicht 520.000 g/Mol. Gehalt an Fest- und Wirkstoffen 2 Gew.-%.
27: Polystyrolsulfonsäure der Firma Sigma-Aldrich. Mittleres Molekulargewicht 70.000 g/Mol. Gehalt an Fest- und Wirkstoffen 2 Gew.-%.
28: Polystyrolsulfonsäure der Firma Sigma-Aldrich. Mittleres Molekulargewicht 100.000 g/Mol. Gehalt an Fest- und Wirkstoffen 2 Gew.-%.
29: Polyvinylsulfonsäure der Firma Sigma-Aldrich. Gehalt an Fest- und Wirkstoffen 2 Gew.-%. Molekulargewicht in der Größenordnung von 1000 bis 50.000 g/Mol.
30: Polyphosphorsäure der Firma Sigma-Aldrich. Gehalt an Fest- und Wirkstoffen 2 Gew.-%. Molekulargewicht in der Größenordnung von 500 bis 800.000 g/Mol.
31: Mit Silangruppen modifizierte anionische Polyacrylsäure von mittlerem Molekulargewicht 4.000 g/Mol in angepasster Vorbehandlungslösung auf Basis von Oxsilan^{®} der Firma Chemetall GmbH. Gehalt an Fest- und Wirkstoffen 2 Gew.-%.
32: Mit Silangruppen modifizierte anionische Polyacrylsäure von mittlerem Molekulargewicht 250.000 g/Mol in angepasster Vorbehandlungslösung auf Basis von Oxsilan^{®} der Firma Chemetall GmbH. Gehalt an Fest- und Wirkstoffen 2 Gew.-%.
32 gerakelt: Die notwendige Schichtstärke von der Aktivierung 32 wurde gezielt mittels Rakelapplikation auf die Substrate aufgebracht. Gehalt an Fest- und Wirkstoffen 2 Gew.-%.
33: Mit Silangruppen modifizierte anionische Polyacrylsäure von mittlerem Molekulargewicht in der Größenordnung von 5000 g/Mol in angepasster Vorbehandlungslösung auf Basis von Oxsilan^{®} der Firma Chemetall GmbH. Gehalt an Fest- und Wirkstoffen 2 Gew.-%.
34: Mit Silangruppen modifiziertes anionisches Polyacrylsäure-Maleinsäure-Copolymer von mittlerem Molekulargewicht 3.000 g/Mol in angepasster Vorbehandlungslösung auf Basis von Oxsilan^{®} der Firma Chemetall GmbH. Gehalt an Fest- und Wirkstoffen 2 Gew.-%.
35: Mit Silangruppen modifiziertes anionisches Polyacrylsäure-Maleinsäure-Copolymer von mittlerem Molekulargewicht 70.000 g/Mol in angepasster Vorbehandlungslösung auf Basis von Oxsilan^{®} der Firma Chemetall GmbH. Gehalt an Fest- und Wirkstoffen 2 Gew.-%.
36: Mit Silangruppen modifiziertes anionisches Polyacrylsäure-acrylamid Copolymer von mittlerem Molekulargewicht 520.000 g/Mol in angepasster Vorbehandlungslösung auf Basis von Oxsilan^{®} der Firma Chemetall GmbH. Gehalt an Fest- und Wirkstoffen 2 Gew.-%.

### IV. Zwischentrocknen der Aktivierungsschicht:

Bei den Experimenten zeigte sich, dass ein Zwischentrocknungsschritt gegebenenfalls einen Einfluss auf die Schichtstärke der Folgeschicht haben kann, da nach einem Zwischentrocknen geringere Mengen der Aktivierungsschicht in dem folgenden Spülschritt V. entfernt wurden als bei einem Spülen ohne vorheriges Zwischentrocknen.
1: 40°C 15 min im Trockenschrank mit Umluft und Frischluftzufuhr getrocknet.

### V. Spülen der Aktivierungsschicht:

Das Spülen erfolgte einmal bei Raumtemperatur über 2 Minuten durch langsames Eintauchen in ein leicht bewegtes Bad mit deionisierten Wasser.

Da bei dem Spülvorgang ein Teil der frischen Aktivierungsschicht abgespült wird, werden die restlichen Gehalte der Aktivierungsschicht zusammen mit Elementgehalten der Reste von Reinigungsmitteln und gegebenenfalls von einer Vorbehandlungsschicht und/oder Primerschicht usw. ermittelt. Es erwies sich als vorteilhaft, wenn beim Spülen ein möglichst hoher Anteil der Aktivierungsschicht erhalten bleibt.

Die Elementgehalte der Aktivierungsschicht wurden mittels Röntgenfluoreszenzanalyse (RFA) für die Aktivierungsschicht einschließlich der Gehalte aus vorherigen Behandlungen - soweit vorhanden - bestimmt. Die Angaben beziehen sich auf die Elementgehalte nach dem Spülen. Hiermit können die verbliebenen Schichtdicken abgeschätzt und von Probe zu Probe verglichen werden, wobei verdeutlicht wird, dass trotz intensiven Spülens vergleichsweise hohe Anteile der Aktivierungsschicht erhalten bleiben. Diese Gehalte genügen, um die aktivierte Oberfläche für die nachfolgenden Behandlungsschritte VI. und VII. wirksam vorzubereiten.

Parallele Untersuchungen mit Rasterelektronenmikroskopie (REM) verdeutlichen, dass geschlossene Beschichtungen aus der Kombination der Kontaktierung mit Aktivierungsmittel und nachträgliches Beschichten mit der wässerigen Zusammensetzung für die Folgeschicht gebildet werden.

### VI. Beschichten der aktivierten Oberflächen mit wässerigen Formulierungen oder Dispersionen zum Ausbilden der Folgeschicht:

Es wurden verschiedenartige wässerige Formulierungen und Dispersionen zum Kontaktieren und/oder Beschichten dieser Bleche vorbereitet. Die Folgeschicht wurde ausgebildet, indem das beschichtete Substrat in ein leicht bewegtes Bad der Dispersion oder der Formulierung jeweils über 5 Minuten bei Raumtemperatur getaucht wurde.

### A) Kationisch stabilisierte wässerige Polymerpartikeldispersionen:

21 (30): Kationisch stabilisierte Dispersion A. Mittlere Partikelgröße d₆₀ 113 nm. Viskosität < 200 mPa·s. pH-Wert 6. Gehalt an Fest- und Wirkstoffen 30 Gew.-%.
21 (20): Kationisch stabilisierte Dispersion A. Mittlere Partikelgröße d₅₀ 113 nm. Viskosität < 200 mPa·s. pH-Wert 6. Gehalt an Fest- und Wirkstoffen 20 Gew.-%.
21 (10): Kationisch stabilisierte Dispersion A. Mittlere Partikelgröße d₅₀ 113 nm. Viskosität < 200 mPa·s. pH-Wert 6. Gehalt an Fest- und Wirkstoffen 10 Gew.-%.
22 (30): Kationisch stabilisierte Dispersion B. Mittlere Partikelgröße d₅₀ 200 nm. Viskosität < 200 mPa·s. pH-Wert 6. Gehalt an Fest- und Wirkstoffen 30 Gew.-%.
22 (20): Kationisch stabilisierte Dispersion B. Mittlere Partikelgröße d₅₀ 200 nm. Viskosität < 200 mPa·s. pH-Wert 6. Gehalt an Fest- und Wirkstoffen 20 Gew.-%.
22 (10): Kationisch stabilisierte Dispersion B. Mittlere Partikelgröße d₅₀ 200 nm. Viskosität < 200 mPa·s. pH-Wert 6. Gehalt an Fest- und Wirkstoffen 10 Gew.-%.
23 (20): Kationisch stabilisierte Polyurethan-Dispersion C mit quaternären Ammoniumgruppen. Mittlere Partikelgröße d₅₀ 230 nm. Viskosität 1-1500 mPa·s. pH-Wert 2-6. Gehalt an Fest- und Wirkstoffen 20 Gew.-%.
24 (20): Kationisch stabilisierte Polyacrylat-Dispersion D. Mittlere Partikelgröße d₅₀ 200 nm. Viskosität 20-200 mPa·s. pH-Wert 7-8. Gehalt an Fest- und Wirkstoffen 20 Gew.-%.
25 (20): Kationisch stabilisierte Polyacrylat-Dispersion E. Mittlere Partikelgröße d₅₀ 84 nm. Viskosität < 200 mPa·s. pH-Wert 8. Gehalt an Fest- und Wirkstoffen 20 Gew.-%.
26 (20): Kationisch stabilisierte Polyacrylat-Dispersion F Mittlere Partikelgröße d₅₀ 117 nm. Vskosität < 200 mPa·s. pH-Wert 8. Gehalt an Fest- und Wirkstoffen 20 Gew.-%.

### B) Kationisch stabilisierte wässerige Formulierungen:

27 (20): Einkomponentige, kationisch stabilisierte Tauchlack-Formulierung. Filmbildungsparameter 175 °C 15 min. pH-Wert 5,8. Gehalt an Fest- und Wirkstoffen 20 Gew.-%.
27 (10): Einkomponentige, kationisch stabilisierte Tauchlack-Formulierung. Filmbildungsparameter 175 °C 15 min. pH-Wert 5,8. Gehalt an Fest- und Wirkstoffen 10 Gew.-%.
28 (20): Einkomponentige, kationisch stabilisierte Tauchlack-Formulierung. Filmbildungsparameter 175 °C 15 min. pH-Wert 5,5. Gehalt an Fest- und Wirkstoffen 20 Gew.-%.
28 (10): Einkomponentige, kationisch stabilisierte Tauchlack-Formulierung. Filmbildungsparameter 175 °C 15 min. pH-Wert 5,5. Gehalt an Fest- und Wirkstoffen 10 Gew.-%.

### VII. Spülen der Folgeschicht:

Das Spülen nach der Folgeschicht dient dazu, nicht koagulierte und/oder ausgefällte Bestandteile der Formulierung und Anhäufungen der Formulierung zu entfernen und den Verfahrensgang wie in der Automobilindustrie üblich so realitätsnah wie möglich zu gestalten. Denn in der Automobilindustrie erfolgt üblicherweise mindestens ein Spülen mit Wasser, meistens entweder durch ein Tauchspülen oder ein Spritzspülen. Das Spülen der Folgeschicht erfolgte einmal über jeweils 2 Minuten bei Raumtemperatur mit deionisiertem Wasser, wobei die mit einer Folgeschicht beschichteten Substrate ohne vorheriges Trocknen der Folgeschicht in ein leicht bewegtes Bad eingetaucht wurden.

### VIII. Trocknen, Verfilmen und/oder Vernetzen der Folgeschicht:

Trocknen oder Trocknen unter Verfilmen insbesondere der organischen polymeren Bestandteile:
1: 175°C 15 min im Trockenschrank mit Umluft und Frischluftzufuhr getrocknet.

Das Trocknen erfolgte mit Verfilmen, denn bei den hohen Temperaturen ergab sich bei allen Beispielen ein Trockenfilm, der im Rasterelektronenmikroskop nicht mehr als partikuläre Beschichtung auflösbar ist.

Parallele Untersuchungen mit Rasterelektronenmikroskopie (REM) verdeutlichten, dass erfindungsgemäß Beschichtungen ausgebildet wurden, die aufgrund der Kombination der Kontaktierung mit Aktivierungsmittel, Spülen und Beschichtung der verbliebenen aktivierten Oberflächen mit einer wässerigen Zusammensetzung insbesondere in Form von Dispersionen und/oder Formulierungen geschlossene Beschichtungen gebildet werden konnten, die oft eine Trockenfilmdicke im Bereich von 3 bis 7 µm aufweisen. Die Trockenfilmdicken sind zwar deutlich geringer als bei denen, die mit kationischem Polyelektrolyten aktiviert wurden, sind aber noch nicht so lange und umfangreich entwickelt worden wie die, die mit anionischem Polyelektrolyten aktiviert wurden. Daher wird eine deutliche Steigerung der Trockenfilmdicken bei weiteren Entwicklungsarbeiten erwartet. Die elektronenmikroskopischen Aufnahmen zeigten durchweg homogene Folgeschichten, was auf ein verlässliches, selbst regulierendes und gut kontrollierbares Beschichtungsverfahren hinweist.

Wenn auf einer dünnen Aktivierungsschicht, die nicht homogen und nicht geschlossen war, eine Folgeschicht ausgebildet wurde, wurde die Folgeschicht zwar dünner, aber dennoch homogen und geschlossen ausgebildet. Bei einigen der Versuche wurde nur in einer Zeit von 2 oder 3 Minuten beschichtet, obwohl die gewählten 5 Minuten Behandlungszeit beibehalten wurden, so dass sich in 5 Minuten Behandlungszeit ein Endstand der Folgeschicht ausbildete. Die ausgebildete Folgeschicht wurde zuerst gespült und erst danach getrocknet. Das Spülen der Folgeschicht diente dem Entfernen überschüssiger Substanz der wässerigen Zusammensetzung und von Verunreinigungen. Hierbei war darauf zu achten, dass die Folgeschicht vor dem Spülen wenige Minuten Zeit hat innerhalb der Behandlungszeit, damit sich der Polyelektrolyt mit der organischen Matrix gut absättigen kann. Bei allen Versuchen reichten hierfür 5 Minuten aus. Es wird angenommen, dass in dieser Zeit eine Umhüllung des Polyelektrolyts mit Polymer erfolgt, so dass die Folgeschicht spülresistent ausgebildet wird. Es zeigte sich, dass die Folgeschichten aus modifiziertem Polyelektrolyt deutlich spülresistenter waren als die Folgeschichten aus nicht-modifiziertem Polyelektrolyt. Dennoch waren die Folgeschichten aus nicht-modifiziertem Polyelektrolyt für diese Versuche ausreichend spülfest. Somit sind die Bedingungen erfüllt, um ein Elektrotauchlackverfahren auf ein stromloses Verfahren umstellen zu können. Erste Korrosions- und Adhäsionstests belegen, dass die Korrosionsbeständigkeit und die Lackhaftung der erfindungsgemäßen Schichtabfolge in einer Größenordnung vorliegen, die für den technischen Einsatzzweck grundsätzlich ausreichend sind. Bei den verschiedensten Versuchen konnten Folgeschichten mit Trockenfilmdicken nur bis zu 7 µm in jeweils 5 Minuten Behandlungszeit ausgebildet werden. Dadurch können auf umweltfreundliche Weise hohe Energiemengen und eine aufwändige Anlagentechnik vermieden werden.

Im Vergleich des Einsatzes von anionischen Polyelektrolyten zum Einsatz von kationischen Polyelektrolyten, zu kationisch wirkenden Salzen und zu anionisch wirkenden Salzen ergaben sich keine grundsätzlichen Unterschiede, aber es zeigten sich quantitative Unterschiede in den Trockenfilmdicken, wobei vorzugsweise jeweils Substanzen mit chemischer Affinität ausgewählt und in dem erfindungsgemäßen Verfahren kombiniert werden.

Es zeigte sich auch bei den anionischen Polyelektrolyten als Aktivierungsmittel, dass die Folgeschichten aus modifiziertem Polyelektrolyt deutlich spülresistenter waren als die Folgeschichten aus nicht-modifiziertem Polyelektrolyt. Dennoch waren die Folgeschichten aus nicht-modifiziertem Polyelektrolyt für diese Versuche ausreichend spülfest. Es zeigten sich die gleichen Bedingungen und Tendenzen, um möglichst dicke Folgeschichten auszubilden, wie sie in den Beispielen und zu den Figuren mit kationischen Polyelektrolyten beschrieben sind. Somit sind auch hier die Bedingungen erfüllt, um ein Elektrotauchlackverfahren auf ein stromloses Verfahren umstellen zu können.

Auch hier belegen erste Korrosions- und Adhäsionstests, dass die Korrosionsbeständigkeit und die Lackhaftung der erfindungsgemäßen Schichtabfolge in einer Größenordnung vorliegen, die für den technischen Einsatzzweck grundsätzlich ausreichend sind.

### Tabelle zu den Beispielen B61-B120:

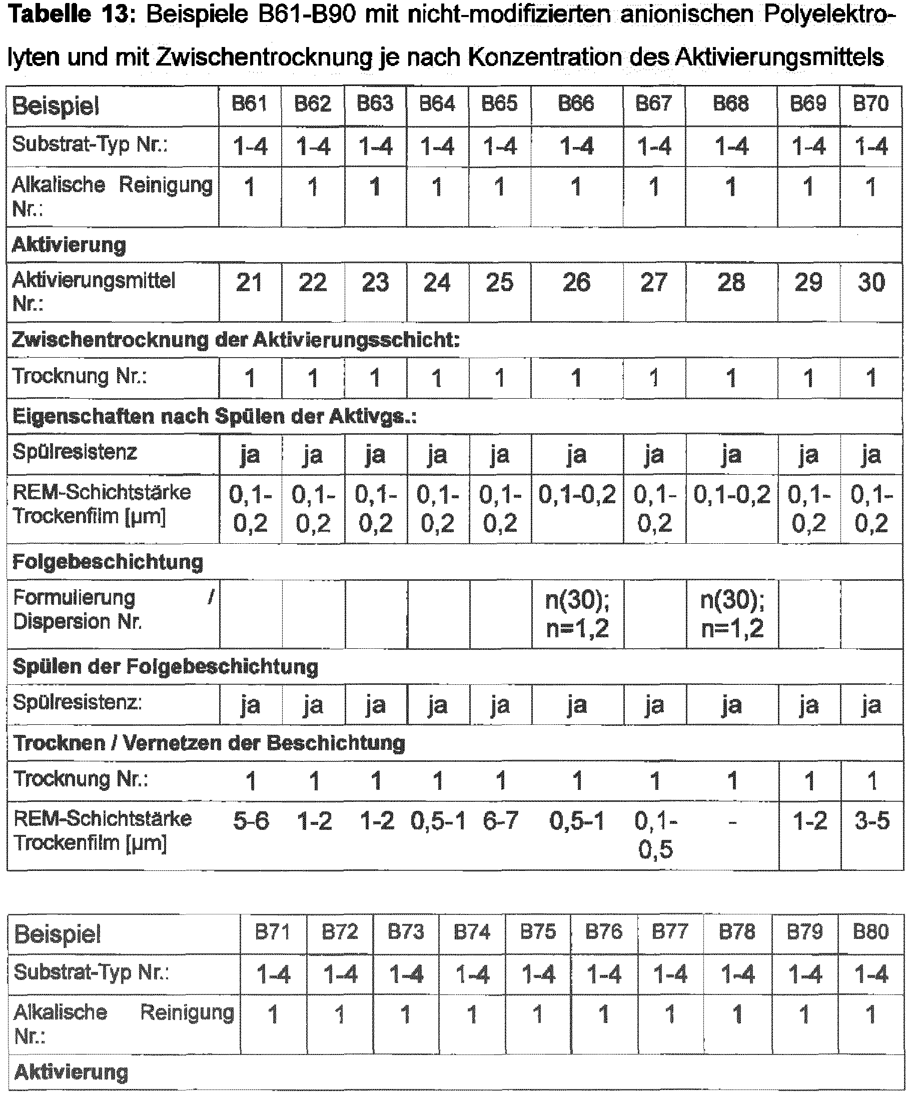

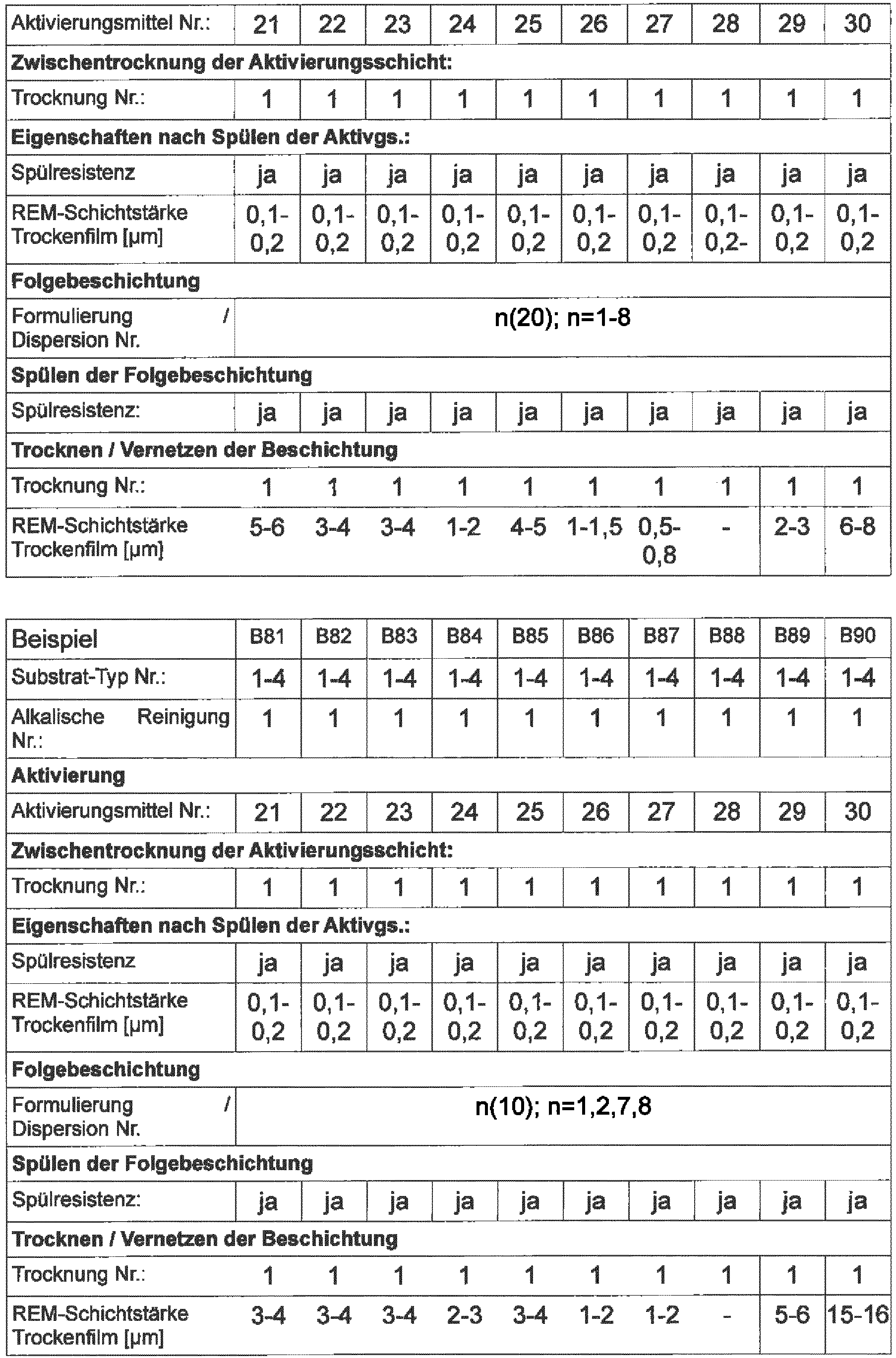

**Tabelle 14: Nachweis der Spülfestigkeit der modifizierten anionischen Polyelektrolyt-Aktivierung ohne Zwischentrocknung bei den Beispielen B91-B97**

| Beispiel | B91 | B92 | B93 | B94 | B95 | B96 | B97 |
|---|---|---|---|---|---|---|---|
| Substrat-Typ Nr.: | 1-4 | 1-4 | 1-4 | 1-4 | 1-4 | 1-4 | 1-4 |
| Alkalische Reinigung Nr.: | 1 | 1 | 1 | 1 | 1 | 1 | 1 |
| **Aktivierung** | | | | | | | |
| Aktivierungsmittel Nr.: | 31 | 32 | 33 | 34 | 35 | 36 | 37 |
| **Zwischentrocknung der Aktivierungsschicht:** | | | | | | | |
| Trocknung Nr.: | - | - | - | - | - | - | - |
| **Eigenschaften nach Spülen der Aktivgs.:** | | | | | | | |
| **Spülresistenz** | **ja** | **ja** | **ja** | **ja** | **ja** | **ja** | **ja** |
| REM-Schichtstärke Trockenfilm [µm] | 0,05-0,1 | 0,05-0,1 | 0,05-0,1 | 0,05-0,1 | 0,05-0,1 | 0,05-0,1 | 0,05-0,1 |
| **Folgebeschichtung** | | | | | | | |
| Formulierung / Dispersion Nr. | - | - | - | - | - | - | - |
| **Spülen der Folgebeschichtung** | | | | | | | |
| Spülresistenz: | - | - | - | - | - | - | - |
| **Trocknen / Vernetzen der Beschichtung** | | | | | | | |
| Trocknung Nr.: | - | - | - | - | - | - | - |
| **REM-Schichtstärke** Trockenfilm [µm] | - | - | - | - | - | - | - |

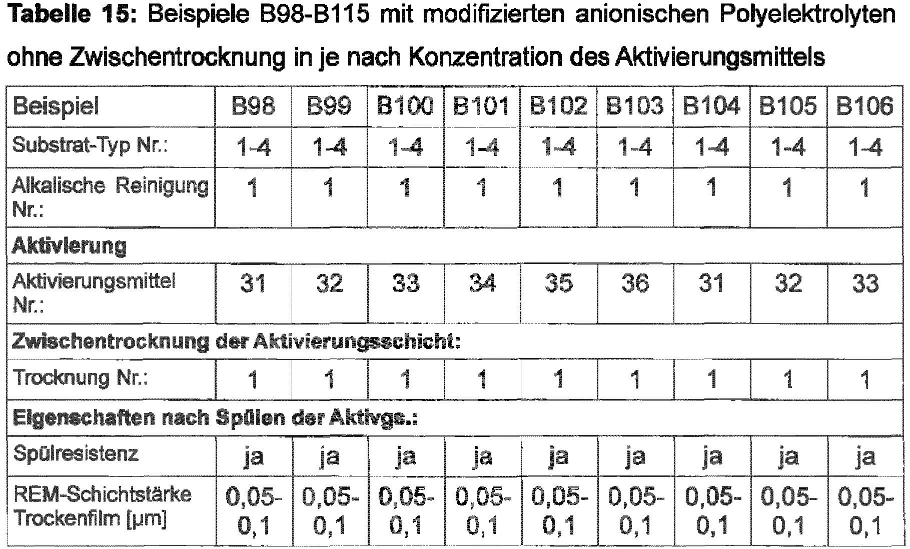

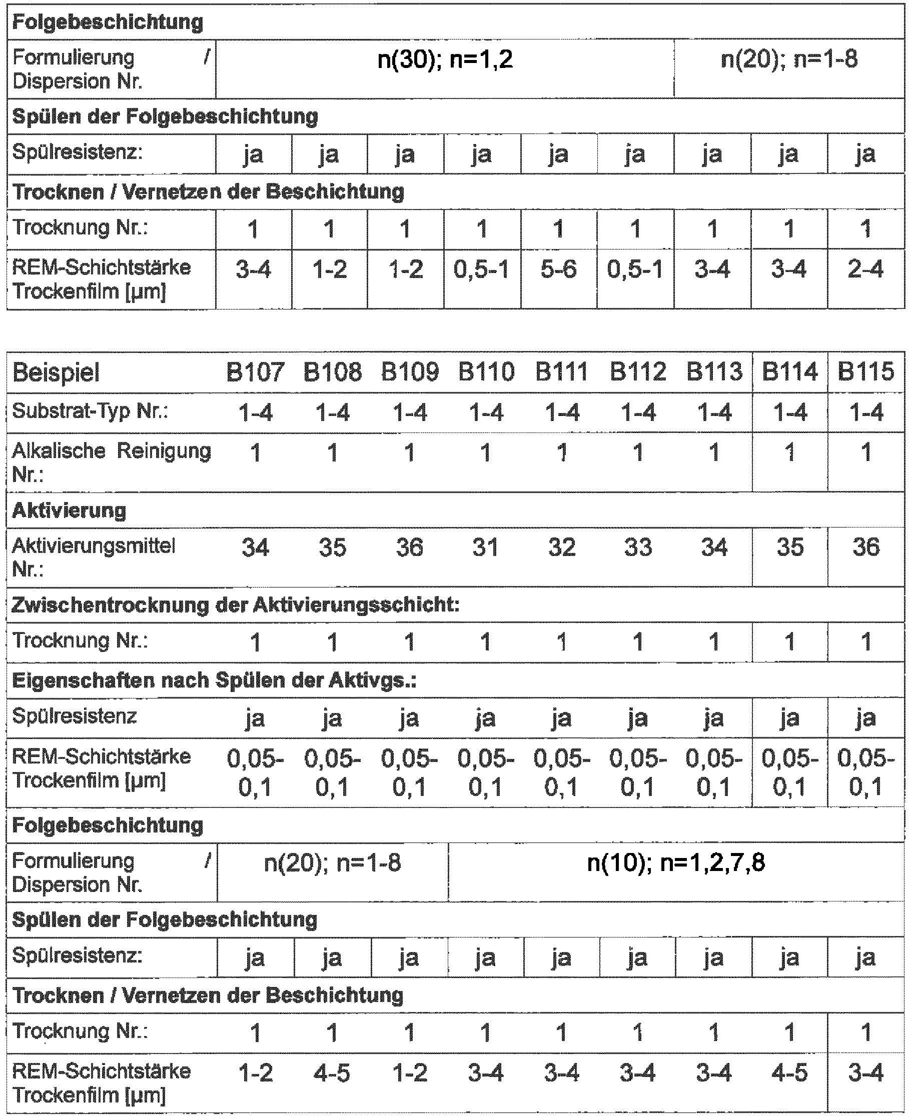

**Tabelle 16: Beispiele B116-B117 zum Nachweis der Korrelation der Trockenfilmdicken der Aktivierungsschicht und der Folgeschicht**

| Beispiel | B116 | B117 |
|---|---|---|
| Substrat-Typ Nr.: | 1,2 | 1,2 |
| Alkalische Reinigung Nr.: | 1 | 1 |
| **Aktivierung** | | |

| Aktivierungsmittel Nr.: | 32 (gerakelt) | 32 (gerakelt) |
|---|---|---|
| **Zwischentrocknung der Aktivierungsschicht:** | | |
| Trocknung Nr.: | 1 | 1 |
| **Eigenschaften nach Spülen der Aktivgs.:** | | |
| Spülresistenz | ja | ja |
| REM-Schichtstärke Trockenfilm [µm] | 0,2 | 0,4 |
| **Folgebeschichtung** | | |
| Formulierung / Dispersion Nr. | n(20); n=1-8 | |
| **Spülen der Folgebeschichtung** | | |
| Spülresistenz: | ja | ja |
| **Trocknen /Vernetzen der Beschichtung** | | |
| Trocknung Nr.: | 1 | 1 |
| REM-Schichtstärke Trockenfilm [µm] | 3-4 | 7-8 |

**Tabelle 17: Ausbildung von dickeren Folgeschichten mit geringer konzentrierten wässerigen Zusammensetzungen zum Ausbilden von Folgeschichten bei den Beispielen B118-B120**

| Beispiel | B118 | B119 | B120 |
|---|---|---|---|
| Substrat-Typ Nr.: | 1-4 | 1-4 | 1-4 |
| Alkalische Reinigung Nr.: | 1 | 1 | 1 |
| **Aktivierung** | | | |
| Aktivierungsmittel Nr.: | 31 | 31 | 31 |
| **Zwischentrocknung der Aktivierungsschicht:** | | | |
| Trocknung Nr.: | 1 | 1 | 1 |
| **Eigenschaften nach Spülen der Aktivgs.:** | | | |
| Spülresistenz | ja | ja | ja |
| REM-Schichtstärke Trockenfilm [µm] | 0,1-0,2 | 0,1-0,2 | 0,1-0,2 |
| **Folgebeschichtung** | | | |
| Formulierung / Dispersion Nr. | n(30); n=1,2 | n(20); n=1,2 | n(10); n=1,2 |
| **Spülen der Folgebeschichtung** | | | |
| Spülresistenz: | ja | ja | ja |
| **Trocknen / Vernetzen der Beschichtung** | | | |
| Trocknung Nr.: | 1 | 1 | 1 |
| REM-Schichtstärke Trockenfilm [µm] | 4-5 | 5-6 | 9-10 |

### Tabellen zu den Vergleichsbeispielen VB121-VB130:

**Tabelle 18: Nachweis, dass sich ohne Aktivierungsschicht keine Folgeschicht ausbildet (kein Viskositätseffekt) bei den Vergleichsbeispielen VB121-VB128**

| Beispiel | VB121 | VB122 | VB123 | VB124 | VB125 | VB126 | VB127 | VB128 |
|---|---|---|---|---|---|---|---|---|
| Substrat-Typ Nr.: | 1-4 | 1-4 | 1-4 | 1-4 | 1-4 | 1-4 | 1-4 | 1-4 |
| Alkalische Reinigung Nr.: | 1 | 1 | 1 | 1 | 1 | 1 | 1 | 1 |
| **Aktivierung** | | | | | | | | |
| Aktivierungsmittel Nr.: | - | - | - | - | - | - | - | - |
| **Zwischentrocknung der Aktivierungsschicht:** | | | | | | | | |
| Trocknung Nr.: | - | - | - | - | - | - | - | |
| **Eigenschaften nach Spülen der Aktivgs.:** | | | | | | | | |
| Spülresistenz | - | - | - | - | - | - | - | - |
| REM-Schichtstärke Trockenfilm [µm] | - | - | - | - | - | - | - | - |
| **Folgebeschichtung** | | | | | | | | |
| Formulierung / Dispersion Nr. | 1 (30) | 2(30) | 3(20) | 4(20) | 5(20) | 6(20) | 7(20) | 8(20) |
| **Spülen der Folgebeschichtung** | | | | | | | | |
| Spülresistenz: | nein | nein | nein | nein | nein | nein | nein | nein |
| **Trocknen / Vernetzen der Beschichtung** | | | | | | | | |
| Trocknung Nr.: | 1 | 1 | 1 | 1 | 1 | 1 | 1 | 1 |
| REM-Schichtstärke Trockenfilm [µm] | 0 | 0 | 0 | 0 | 0 | 0 | 0 | 0 |

**Tabelle 19: Maximal erreichbare Trockenfilmdicken mit der Technologie von WO 2010/054985 A1 bei den Vergleichsbeispielen VB129-VB130**

| Beispiel | VB129 | VB130 |
|---|---|---|
| Substrat-Typ Nr.: | 1,2 | 1,2 |
| Alkalische Reinigung Nr.: | 1 | 1 |
| **Aktivierung** | | |
| Aktivierungsmittel Nr.: | 23 | 24 |
| **Zwischentrocknung der Aktivierungsschicht:** | | |
| Trocknung Nr.: | - | - |
| **Eigenschaften nach Spülen der Aktivgs.:** | | |
| Spülresistenz | ja | ja |
| RFA-Elementgehalt mg/m²: | | |
| Si | 4-7 | 5-9 |
| Ti | <1 | <1 |
| Zr | 15-20 | 15-21 |
| Mn | <1 | <1 |
| REM-Schichtstärke Trockenfilm [µm] | - | - |
| **Folgebeschichtung** | | |
| Formulierung / Dispersion Nr. | n(20); n =1,2,7,8 | |
| **Spülen der Folgebeschichtung** | | |
| Spülresistenz: | ja | ja |
| **Trocknen / Vernetzen der Beschichtung** | | |
| Trocknung Nr.: | 1 | 1 |
| REM-Schichtstärke Trockenfilm [µm] | 0,2-0,3 | 0,1-0,2 |

## Patentansprüche

1. Verfahren zum stromlosen Beschichten von Substraten umfassend die Schritte oder bestehend aus den Schritten:
I. Bereitstellen eines Substrats,
III. Aufbringen einer Aktivierungsschicht,
V. Spülen der Aktivierungsschicht, wobei die Aktivierungsschicht nicht gänzlich entfernt wird,
VI. Kontaktieren und Beschichten der nach dem Spülen verbliebenen aktivierten Oberflächen mit einer wässerigen Zusammensetzung in Form einer Lösung, Emulsion oder Suspension zum Ausbilden einer organischen Folgeschicht (= Fällungsschicht),
VII. Spülen der Folgebeschichtung,
VIII. Trocknen und/oder Vernetzen der Beschichtung,
**dadurch gekennzeichnet, dass**
die Aktivierungsschicht aus einem oder mehreren anionischen Polyelektrolyten ausgewählt aus der Gruppe bestehend aus Polyacrylsäure, mit Silan modifizierter Polyacrylsäure, mit Silanverbindung(en) modifizierter Polyacrylsäure, Polyacrylsäure-Maleinsäure-Copolymer, mit Silan modifiziertem Polyacrylsäure-Maleinsäure-Copolymer, mit Silanverbindung(en) modifiziertem Polyacrylsäure-Maleinsäure-Copolymer, Polyacrylsäure-Acrylamid-Copolymer, mit Silan modifiziertem Polyacrylsäure-Acrylamid-Copolymer, mit Silanverbindung(en) modifiziertem Polyacrylsäure-Acrylamid-Copolymer, Polystyrolsulfonsäure, Polyvinylsulfonsäure, Polyphosphorsäure und Gemischen davon gebildet wird,
und
dass die wässerige Zusammensetzung zum Ausbilden einer Folgeschicht fällbare, niederschlagbare und/oder aussalzbare Bestandteile aufweist, die anionisch, zwitterionisch, sterisch und/oder kationisch stabilisiert sind, bei der sich anionisch und kationisch stabilisierte Bestandteile in der wässrigen Zusammensetzung nicht beeinträchtigen,
und
dass der dabei oder später ausgebildete Trockenfilm aus der Folgeschicht oder aus der Aktivierungsschicht und der Folgeschicht eine Dicke von mindestens 1 µm aufweist.

2. Verfahren nach Anspruch 1, **dadurch gekennzeichnet, dass** einer oder mehrere der folgenden Schritte zusätzlich durchgeführt werden:
II. Reinigen des Substrats,
IV. Zwischentrocknen der Aktivierungsschicht.

3. Verfahren nach Anspruch 1 oder 2, **dadurch gekennzeichnet, dass** zum Ausbilden einer Aktivierungsschicht zusätzlich eine Hilfsspannung angelegt wird, bevorzugt von weniger als 2,5 V, wobei die Hilfsspannung eine Ionenwanderung beschleunigt, aber nicht ein Ausfällen, ein Niederschlagen und/oder ein Aussalzen auslöst.

4. Verfahren nach einem der vorstehenden Ansprüche, **dadurch gekennzeichnet, dass** die Folgeschicht weiter beschichtet wird.

5. Verfahren nach einem der vorstehenden Ansprüche, **dadurch gekennzeichnet, dass** zum Ausbilden einer Aktivierungsschicht mindestens ein modifizierter Polyelektrolyt verwendet wird, der mit einem Silan/Silanol/Siloxan mit einem Kondensationsgrad im Bereich von 1 bis 30, d.h. mit 1 bis 30 Monomereneinheiten pro Molekül, modifiziert wurde.

6. Verfahren nach einem der vorstehenden Ansprüche, **dadurch gekennzeichnet, dass** in Schritt VI. die wässerigen Zusammensetzungen zum Ausbilden einer organischen Folgeschicht sind, ausgewählt aus der Gruppe bestehend aus folgenden wässerigen Zusammensetzungen:
A) anionisch stabilisierten Polymerpartikeldispersionen,
B) anionisch stabilisierten Formulierungen,
C) sterisch stabilisierten Polymerpartikeldispersionen,
D) sterisch stabilisierten Formulierungen,
E) zwitterionisch stabilisierten Polymerpartikeldispersionen,
F) zwitterionisch stabilisierten Formulierungen
und deren Mischungen
oder ausgewählt aus der Gruppe bestehend aus folgenden wässerigen Zusammensetzungen aus:
G) kationisch stabilisierten Polymerpartikeldispersionen,
H) kationisch stabilisierten Formulierungen,
I) sterisch stabilisierten Polymerpartikeldispersionen,
J) sterisch stabilisierten Formulierungen,
K) zwitterionisch stabilisierten Polymerpartikeldispersionen,
L) zwitterionisch stabilisierten Formulierungen
und deren Mischungen enthält.

7. Verfahren nach einem der vorstehenden Ansprüche, **dadurch gekennzeichnet, dass** das Kontaktieren und Beschichten beim Aktivieren und/oder zum Ausbilden einer Folgeschicht in einem Tauchverfahren erfolgt.

8. Verfahren nach einem der vorstehenden Ansprüche, **dadurch gekennzeichnet, dass** in Schritt I. ein metallisches Substrat ausgewählt aus der Gruppe bestehend aus Aluminium, Eisen, Kupfer, Magnesium, Titan, Zink, Zinn und deren Legierungen mit einem Gehalt an Aluminium, Eisen, Stahl, Kupfer, Magnesium, Nickel, Titan, Zink und/oder Zinn eingesetzt wird.

9. Verfahren nach einem der vorstehenden Ansprüche, **dadurch gekennzeichnet, dass** das Substrat vorbeschichtet ist und/oder mit einem Kunststoffbauteil verbunden ist.

10. Verwendung von Substraten, die nach dem Verfahren nach einem der vorstehenden Ansprüche beschichtet wurden, im Fahrzeug- oder Flugzeugbau, im Bauwesen, im Gerätebau oder im Heizungsbau und insbesondere für Komponenten für Fahrzeuge wie Fahrzeugkarosserien, für Flugkörper, für Architekturanwendungen, für Heizungen und für Haushaltsgeräte.

## Claims

1. A method for electroless coating of substrates, comprising or consisting of the following steps:
I. provision of a substrate,
III. application of an activating coat,
V. rinsing of the activating coat, the activating coat not being entirely removed,
VI. contacting and coating of the activated surfaces that have remained after rinsing, with an aqueous composition in the form of a solution, emulsion or suspension, to form an organic secondary coat (= precipitation coat),
VII. rinsing of the secondary coat, and
VIII. drying and/or crosslinking of the coating,
**characterized in that**
the activating coat is formed from one or more anionic polyelectrolytes selected from the group consisting of polyacrylic acid, silane-modified polyacrylic acid, polyacrylic acid modified with silane compound(s), polyacrylic acid-maleic acid copolymer, silane-modified polyacrylic acid-maleic copolymer, polyacrylic acid-malic acid copolymer modified with silane compound(s), polyacrylic acid-acrylamide copolymer, silane-modified polyacrylic acid-acrylamide copolymer, polyacrylic acid-acrylamide copolymer modified with silane compound(s), polystyrenesulfonic acid, polyvinylsulfonic acid, polyphosphoric acid, and mixtures thereof and
**in that** the aqueous composition to form a secondary coat has constituents which can be precipitated, deposited and/or salted out and which are anionically, zwitterionically, sterically and/or cationically stabilized, and
**in that** the dry film formed in this procedure or subsequently from the secondary coat or from the activating coat and the secondary coat, has a thickness of at least 1 µm.

2. The method of claim 1, **characterized in that** one or more of the following steps are additionally conducted:
II. Rinsing of the substrate
IV. Intermediate drying of the activating coat

3. The method of claim 1 or 2, **characterized in that** to form an activating coat additionally an auxiliary voltage is applied, preferably of less than 2.5 V, the auxiliary voltage accelerating ion migration but not initiating precipitation, deposition and/or salting out.

4. The method of any of the preceding claims, **characterized in that** the secondary coat is further coated.

5. The method of any of the preceding claims , **characterized in that** to form an activating coat at least one modified polyelectrolyte is used which has been modified with a silane/silanol/siloxane with a degree of condensation in the range from 1 to 30, that is with 1 to 30 monomer units per molecule.

6. The method of any of the preceding claims , **characterized in that** in step VI. the aqueous compositions are to form an organic secondary coat, selected from the group consisting of the following aqueous compositions:
A) anionically stabilized polymer particle dispersions,
B) anionically stabilized formulations,
C) sterically stabilized polymer particle dispersions,
D) sterically stabilized formulations,
E) zwitterionically stabilized polymer particle dispersions,
F) zwitterionically stabilized formulations
and mixtures thereof
or selected from the group consisting of the following aqueous compositions:
G) cationically stabilized polymer particle dispersions,
H) cationically stabilized formulations,
I) sterically stabilized polymer particle dispersions,
J) sterically stabilized formulations,
K) zwitterionically stabilized polymer particle dispersions,
L) zwitterionically stabilized formulations
and mixtures thereof.

7. The method of any of the preceding claims, **characterized in that** the contacting and coating during activating and/or to form a secondary coat take place in a dipping process.

8. The method of any of the preceding claims, **characterized in that** in step I. a metallic substrate is used that is selected from the group consisting of aluminum, iron, copper, magnesium, titanium, zinc, tin and alloys thereof containing aluminum, iron, steel, copper, magnesium, nickel, titanium, zinc and/or tin.

9. The method of any of the preceding claims, **characterized in that** the substrate has been pre-coated and/or joined to a plastic component.

10. The use of substrates coated by the method of any of the preceding claims in vehicles or aircraft construction, in the construction industry, in appliance construction or in heating systems, and especially for components for vehicles such as vehicle bodies, for missiles, for architectural applications, for heating systems, and for household appliances.

## Revendications

1. Procédé de revêtement sans courant des substrats comportant les étapes ou consistant en les étapes:
a fourniture d'un substrat,
III. application d'une couche d'activation,
V. rincage de la couche d'activation, la couche d'activation n'étant pas éliminée complètement,
◊a mise en contact et revêtement des surfaces activées restantes après le rincage, avec une composition acqueuse sous forme d'une solution, émulsion ou suspension pour former une couche consécutive organique (=couche de précipitation),
VII. rinçage de la couche consécutive,
VIII. séchage et/ou réticulation du revêtement
**caractérisé en ce que**
la couche d' activation est formée d'une ou de plusieurs polyélectrolytes anioniques sélectionés du groupe consistant de l acide polyacrylique, de l'acide polyacrylique silane-modifié, de l'acide polyacrylique modifié avec des composition(s) de silane, de copolymère de l'acide polyacrylique-l'acide-maleique, de copolymère de l'acide polyacrylique- l'acide-maleique modifié avec de silane, de copolymère de l'acide polyacrylique-l'acide-maleique modifié avec des composition(s) de silane, de copolymère de l'acide polyacrylique -acrylamide, de copolymère de l'acide polyacrylique -acrylamide modifié avec de silane, de copolymère de l'acide polyacrylique -acrylamide, de copolymère de l'acide polyacrylique-acrylamide modifié avec des composition(s) de silane, de l'acide polystyrènesulfonique , de l'acide polyvinylsulfonique,
de l'acide polyphosphorique et des mélanges de ceux-ci et
**en ce que** la composition acqueuse pour former une couche consécutive comporte des composants pouvant être précipités, déposés et/ou relargés qui sont stabilisés de façon anionique, zwitterionique, sterique et/ou cationique, et
**en ce que** le film sec formé dans ce procédé ou après à partir de la couche consécutive, ou de la couche d'activation et de la couche consécutive a une épaisseur d'au moins 1 µm.

2. Procédé selon la revendication 1, **caractérisé en ce qu'**une ou plusieures des étapes suivantes sont effectuées en supplément:
II. Rinçage du substrat
IV. Sechage intermédiaire de la couche d'activation

3. Procédé selon la revendication 1 ou 2 , **caractérisé en ce que**, pour former une couche d'activation, en outre une tension auxiliaire est appliquée , de préférence inférieure à 2.5 V, dans lequel la tension auxiliaire accélère une migration ionique, mais ne déclenche pas précipitation, déposition et/ou relargage.

4. Procédé selon l'une des revendications précédentes, **caractérisé en ce que** la couche consécutive est toujours revêtue.

5. Procédé selon l'une des revendications précédentes, **caractérisé en ce que** pour former une couche d'activation au moins un polyélectrolyte modifié est utilisé, qui a été modifié avec un silane/silanol/siloxane avec un niveau de condensation dans l'intervalle 1 à 30, ca veut dire avec des unités de 1 à 30 monomers per molecule.

6. Procédé selon l'und des revendications précédentes, **caractérisé en ce qu'**à l'étape VI. les compositions aqueuses sont pour former une couche consécutive organique, choisis du groupe constitué par les compositions aqueuses suivantes:
A) dispersions de particules de polymère stabilisées anioniquement.
B) formulations anioniquement stabilisées,
C) dispersions de particules de polymère stabilisées.
D) formulations stériquement stabilisées,
E) dispersions de particules de polymère zwitterioniquement stabilisées,
F) formulations zwitterioniquement stabilisées et leurs mélanges
ou choisi dans le groupe constitué par les compositions aqueuses suivantes:
G) dispersions de particules de polymère cationiquement stabilisées
H) formulations cationiquement stabilisées,
I) dispersions de particules de polymère stériquement stabilisées,
II) formulations stériquement stabilisées,
K) dispersions de particules de polymère zwitterioniquement stabilisée,
L) formulations zwitterioniquement stabilisées
et leurs mélanges .

7. Procédé selon l'une quelconque des revendications précédentes, **caractérisé en ce que** la mise en contact et le revêtement lors de l'activation et/ou de la formation d'une couche consécutive est effectuée dans un procédé de trempage.

8. Procédé selon l'une quelconque des revendications précédentes, **caractérisé en ce qu'**à l'étape I. un substrat métallique est utilisé , choisi dans le groupe constitué par l' aluminum, le fer, le cuivre, le magnésium, le titane, le zinc, l'étain et leurs alliages consistants de l'aluminum, de fer, de cuivre, de magnésium, de nickel, de titane, de zinc et/ou d'étain.

9. Procédé selon l'une quelconque des revendications précédentes, **caractérisé en ce que** le substrat a éte pré-révêtu et/ou relié à un composant plastique.

10. Utilisation des substrats revêtus par le procédé selon l'une quelconque des revendications précédentes, dans la construction de véhicules ou d'avions, dans l'industrie de construction, dans la construction d'appareils ou dans des systèmes de chauffage, et en particulier pour des composants pour des vehicules tels que les carosseries des vehicules, pour des missiles, pour des applications architecturales , pour des systèmes de chauffage et pour des appareils ménagers.
